Europäisches Patentamt

European Patent Office

Office européen des brevets

(19)

(11) Veröffentlichungsnummer : **0 096 079**
**B1**

# (12) EUROPÄISCHE PATENTSCHRIFT

(45) Veröffentlichungstag der Patentschrift :
20.08.86

(21) Anmeldenummer : 82104509.3

(22) Anmeldetag : 24.05.82

(51) Int. Cl.⁴ : **G 06 F   3/12**

(54) **Verfahren zur Aufbereitung von Punktrasterdaten für Zeichen- und/oder Bilddarstellungen.**

(43) Veröffentlichungstag der Anmeldung :
21.12.83 Patentblatt 83/51

(45) Bekanntmachung des Hinweises auf die Patenterteilung : 20.08.86 Patentblatt 86/34

(84) Benannte Vertragsstaaten :
CH DE FR GB IT LI NL SE

(56) Entgegenhaltungen :
FR-A- 2 395 840
US-A- 4 084 195
US-A- 4 218 754
IBM TECHNICAL DISCLOSURE BULLETIN, Band 23, Nr. 4, September 1980, Seiten 1676-1677, New York, USA J.N. DUNN et al.: "Maintenance of visual integrity during text editing"

(73) Patentinhaber : **IBM DEUTSCHLAND GMBH**
**Pascalstrasse 100**
**D-7000 Stuttgart 80 (DE)**
**DE**
**International Business Machines Corporation**
**Old Orchard Road**
**Armonk, N.Y. 10504 (US)**
**CH FR GB IT LI NL SE**

(72) Erfinder : **Hasselmeier, Helmut, Dipl.-Math.**
**Mörikestrasse 37**
**D-7031 Aidlingen (DE)**

(74) Vertreter : **Blutke, Klaus, Dipl.-Ing.**
**Schönaicher Strasse 220**
**D-7030 Böblingen (DE)**

## Beschreibung

Die Erfindung betrifft ein Verfahren zur Aufbereitung von Punktrasterzeilen auf der Seite (bzw. Bildfläche) eines Aufzeichnungsmediums darzustellender Zeichen- und/oder Bildinformation im Speicher einer Datenverarbeitungsanlage. Es sind verschiedene Druckverfahren bekannt, bei dennen die Aufzeichnung von Zeichen und graphischer Information in Punktrasterform erfolgt. Solche Punktraster können beispielsweise durch Mosaik (Nadel)-Drucker, Metallpapierdrukker, Laserdrucker oder mit Rasterbildschirmgeräten erzeugt werden. Bei allen diesen Aufzeichnungsverfahren wird durch entsprechende Druckelemente eine punktförmige Aufzeichnung erzeugt oder entsprechende Schreibstrahlen werden so gesteuert, daß sich eine punktförmige Aufzeichnung ergibt.

Bei der Ausgabe von gedruckten Seiten mit Text und/oder graphischer Information spielt die Layout-Gestaltung eine wesentliche Rolle. Darunter soll die gegenseitige Anordnung von Test- und Bildblöcken auf einer Seite (bzw. Bildfläche) verstanden werden.

Die Anwendung von Datenverarbeitungsanlagen im Zusammenhang mit von ihnen betriebenen Ausgabegeräten vorgenannter Art hat die Möglichkeit geschafften, die aufzuzeichnende Information zunächst im Speicher der Datenverarbeitungsanlage aufzubereiten. Ein solcher Speicher besteht aus einer Vielzahl von Speicherzellen (Bits), in denen jeweils die Information für ein auszudruckendes Bildelement (im folgenden pel genannt : abgeleitet von dem im angelsächsischen Sprachraum für Bildelement üblichen « picture element ») gespeichert wird. So wird die auszugebende Druckseite zunächst punktweise im Speicher aufbereitet, bevor jedes gespeicherte pel an dem dür ihn vorgesehenen Platz auf der Druckseite ausgegeben werden kann. Ein solcher Druckspeicher müßte besonders bei hochauflösenden Druckverfahren äußerst groß sein. Druckseiten mit ca. 33 Millionen pels sind keine Seltenheit : d. h., der Druckspeicher müßte, wenn er die gesamte Druckseite bitgetreu wiederspiegeln sollte, eine sehr große Kapazität haben, nämlich 33 Millionen Bits.

Eine solche Lösung wäre jedoch mit dem großen Nachteil verbunden, daß der Druckspeicher eine enorme Größe aufweisen müßte.

Für moderne Datenverarbeitungsanlagen wäre ein derart großer Druckspeicher unzweckmäßig ; selbst bei einem virtuellen Speicherkonzept blieben bestimmte Nachteile nicht zu übersehen. Virtuell bedeutet in diesem Zusammenhang, daß die Datenverarbeitungsanlage ein äußerst großen externen Speicher aufweist und daß die Information dieses externen Speichers blockweise in den Arbeitsspeicher der Datenverarbeitungsanlage eingelesen und dort verarbeitet werden kann. Mit anderen Worten : es ist möglich, eine aufzubereitende Druckseite bitweise auf einem externen Speicher zu speichern, jedoch würde die Aufbereitung dieser Druckseite im Arbeitsspeicher ein zeitaufwendiges Ein- und Auslesen entsprechender Blöcke dieser Druckseite erfordern.

Somit sind die bisherigen Möglichkeiten zur Aufbereitung einer Druckseite entweder zu speicher- oder zu zeitintensiv.

Andere Verfahren und Systeme zur Druckdatenaufbereitung wie sie noch erwähnt werden, sind oftmals zu speziell ausgelegt oder erfordern spezielle aufwendige Schaltungen.

Zur Vermeidung dieser Nachteile ist es Aufgabe der Erfindung, eine Möglichkeit vorzusehen, wonach zur schnellen Aufbereitung der Druckdaten im Speicher der Datenverarbeitungsanlage nur ein relativ geringer Speicherbedarf erforderlich ist.

Diese Aufgabe der Erfindung wird durch die im kennzeichnenden Teil des Patentanspruches 1 angegebenen Maßnahmen gelöst.

Vorteilhafte Weiterbildungen des erfindungsgemäßen Verfahrens sind den Unteransprüchen zu entnehmen.

Zum Stand der Technik :

Aus der deutschen Offenlegungsschrift OS 25 16 332 ist ein Verfahren zur Codierung von elektrischen Signalen bekannt, die bei der Abtastung eines graphischen Musters mit aus Text und Bildern gemischtem Inhalt gewonnen werden. Dabei wird das graphische Muster in Teilbereiche unterteilt, und zur Codierung der bei der Abtastung von dem wesentlichen Bildanteile enthaltenden Teilbereiche gewonnenen elektrischen Signalen wird ein Bildcode verwendet. Zur Codierung der bei der Abtastung von dem wesentlichen Textanteile enthaltenen Teilbereiche wird ein Textcode verwendet.

In der deutschen Offenlegungsschrift OS 28 25 321 ist ein Rasterdrucker beschrieben zum Drucken von Zeichen an beliebiger Stelle des Blattes, sei es von rechts nach links oder von oben nach untern. Auch mit Buchstaben unterschiedlicher Größe und/oder unterschiedlicher Schriftart. Dieser Rasterdrucker eignet sich auch für graphische Darstellungen.

In der US-Patentschrift 3 828 319 ist ein System zur Erzeugung eines Punktrasterbildes aus von einem Computer gelieferten Binärsignalen beschrieben, welches zum Mischen von Informationen von zwei aus einzelnen Registern bestehenden sogenannten « Push-down »-Speichern Gebrauch macht.

Außerdem ist in der deutschen Offenlegungsschrift OS 21 61 038 ein Verfahren zur Gewinnung von Daten zur Herstellung von gerasterten Rotationsdruckformen beschrieben, wobei Rasterpunkte auf der Druckform als nebeneinanderliegende Linien aufgezeichnet werden. Von Schriftzeichen- und Bildvorlagen werden entsprechend dem Raster der Druckweise Aufzeichnungsdaten für die Rasterpunkte gewonnen und als Datengruppen in einem oder mehreren ersten Speichern gespeichert. Die Datengruppen von aufzuzeichnenden Schriftzeichen und Bildern werden dem oder den ersten Speichern entnommen, in ihrer Aufzeichnungsfolge geordnet und in Zwischenspeichern gespeichert, aus denen sie als gleichen Aufzeichnungslinien angehörende Bildlinien zur Steuerung einer kontinuierlichen Aufzeichnung im Takte des Rasters entnommen werden.

In der deutschen Offenlegungsschrift OS 27 24 199 ist ein System zum optischen Wiedergabe von Symbolen, Zeichen und Darstellungen, insbesondere für das Layout von Anzeigen in Zeitungen und dgl. beschrieben. Dieses System weist zur Aufnahme eingegebener Informationen eine Endgerätesteuereinrichtung auf, welche Daten, Steuersignale, Adressen und Zeittaktsignale zu einer weiterhin dem System zugeordneten, gemeinsamen logischen Steuereinrichtung weitergibt. Dieser logischen Steuereinrichtung ist zur Bearbeitung der erhaltenen Daten, Adressen und Zeittaktpulse ein Rechner zugeteilt.

In der deutschen Offenlegungsschrift OS 27 24 075 ist ein System beschrieben zur optischen Wiedergabe von Symbolen, Zeichen und Darstellungen, insbesondere dür den Layout von Anzeigen in Zeitungen und dgl., unter Verwendung einer gemeinsamen logischen Steuereinrichtung und von Sichtgeräten. Dabei werden sowohl fest vorgegebene und gespeicherte, als auch nachträglich eingegebene, veränderbare, den Symbolen, Zeichen und Darstellungen betreffende Signale in der gemeinsamen, logischen Steuereinrichtung verknüpft. Dann wird über eine diese Steuereinrichtung zugeordnete Bildspeicheranordnung die optische Wiedergabe bewirkt.

Ein Ausführungsbeispiel der Erfindung ist in den Zeichnungen dargestellt und wird im folgenden näher beschrieben.

Es zeigen:

Figur 1 ein Layout-Plan für eine zu bedruckende Seite, Text- und Bildblöcke umfassend.

Figur 2 eine schematische Darstellung zur Strukturierung einer auszudruckenden Seite, bestehend aus einzelnen untereinanderliegenden Punkt-Raster-Zeilen, von denen gleichzeitig mehrere mittels eines in Zeilenrichtung über die Seite laufenden Schreibkopfes ausgegeben werden.

Figur 2a eine schematische auszugsweise Darstellung von Fig. 2 zur Kennzeichnung des Punkt-Rasters in den Punkt-Raster-Zeilen und in den Punkt-Raster-Streifen (Seiten-Streifen).

Figur 3 eine schematische Darstellung des sogenannten Fenster-Prinzips bei der Ausgabe von Druckinformation auf die Seite. Dabei nimmt das Fenster nacheinander unterschiedliche Fenster-Positionen ein, wobei jeder Fenster-Position bestimmte Seiten-Streifen zugeordnet sind.

Figur 4 eine schematische Darstellung des sogenannten Fensterspeichers, dessen Bitzeilen entsprechenden Punkt-Raster-Zeilen auf der Seite zugeornet werden. (Jeweils acht untereinanderliegende Bitzeilen sind zu einem Fenster-Speicher-Streifen zusammengefaßt).

Figur 4a eine schematische ausschnittsweise Darstellung von Fig. 4 zur bitweisen Raster-Punkt-Dartstellung im Fensterspeicher.

Fig. 5 eine schematische Darstellung des Fensterspeichers mit zu Fenster-Speicher-Streifen zusammengefaßten Bitzeilen, wobei diese Fenster-Speicher-Streifen eine entsprechende Zuordnung zu den Seiten-Streifenb der Druckseite erfahren.

Figur 6 eine schematische Darstellung zum Informationsfluß zwischen dem Fensterspeicher und einem Pufferspeicher sowie zur Aufnahme von Information in den Fensterspeicher und zur Ausgabe von Information aus dem Pufferspeicher.

Figur 7 eine schematische Darstellung des Informationsflusses für für eine Druckaufbereitung, ausgehend von codiert-gespeicherter Textinformation und raster-punkt-weise (unkomprimiert oder komprimiert) gespeicherter Bildinformation unter Hinzuziehung eines Schrift-art-Speichers zur Abgabe von Raster-Punkt-Information für die einzelnen durch Codes gekennzeichneten Zeichen.

Figur 8 eine schematische Darstellung zur Übertragung der Raster-Punkt-Information für das Zeichen f aus dem Schriftart-Speicher in den Fensterspeicher.

Figur 9 eine schematische Darstellung für das in den Fensterspeicher übertragene Zeichen f für bestimmte Seiten-Streifen.

Figur 10 eine schematische Darstellung zur Ausgabe des Zeichens f in andere Seiten-Streifen für die Fensterposition II.

Figur 11 eine schematische Darstellung zur teilweisen Aufnahme des Zeichens f in den Fensterspeicher für die Fenster-Position I.

Figur 12 eine schematische Darstellung zur gänzlichen Aufnahme des Zeichens f in den Fensterspeicher entsprechend der Fenster-Position II.

Figur 13 eine schematische Darstellung für eine gedachte ununterbrochene Übertragung der Raster-Punkt-Information für ein Zeichen aus dem Schriftart-Speicher in den Fensterspeicher.

Figur 14 eine schematische Darstellung zur Ausgabe der Zeichen p und q mit unterschiedlichen Grundlinien im Fensterbereich.

Figuren 15a bis 15c eine schematische Darstellung zum Laden der Buchstaben p und q in den Fensterspeicher und zur partiellen Ausgabe von Fensterspeicher-Information in den Pufferspeicher.

Figur 16 eine schematische Darstellung des Zeichens I, dessen oberes und unteres Ende nicht mit einer Streifengrenze auf der Seite abschließt.

Figur 17 eine schematische Darstellung dreier zu verschiedenen Textblöcken gehörenden Zeichengruppen mit unterschiedlichen Grundlinien.

Figur 18 eine schematische Darstellung zur Komprimierung/Dekomprimierung von bitweise gespeicherter Rasterpunkt-Zeichen-Information.

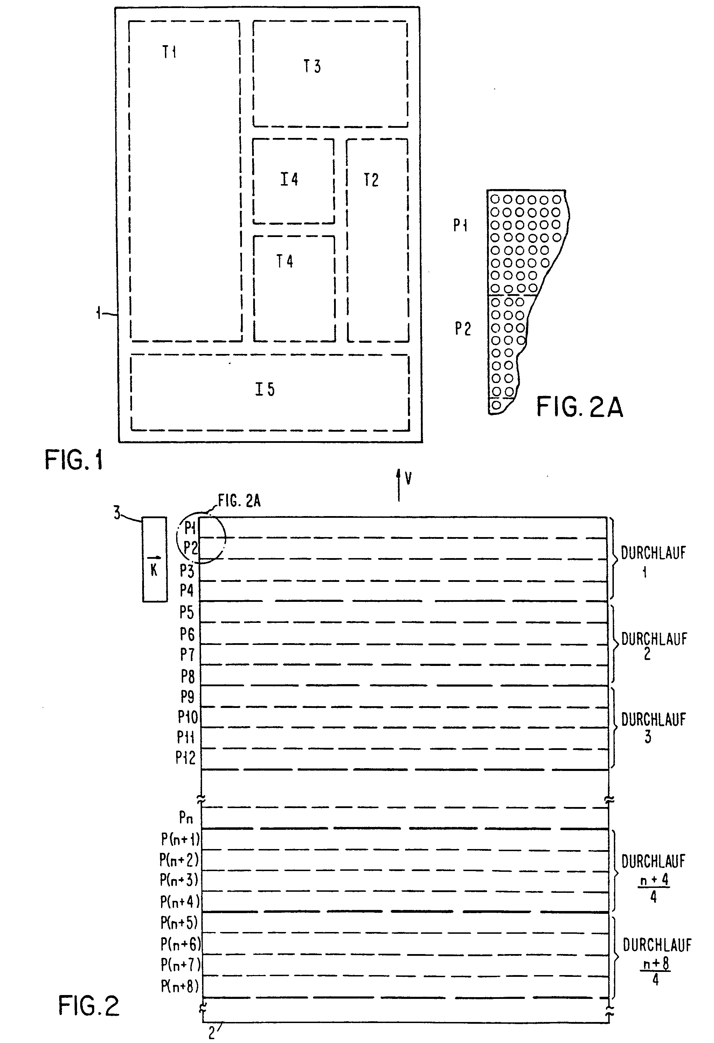

In Fig. 1 ist ein Layout-Plan für eine zu bedruckende Seite, Text- und Bildblöcke umfassend, gezeigt. Die zu druckende Seite ist mit 1 gekennzeichnet, die Textblöcke mit T1, T2, T3, T4 ; die Bildblöcke mit 14 und 15. Innerhalb der Textblöcke sind Schriftzeichen zeilenweise angeordnet. Dabei müssen die Grundlinien nebeneinanderliegender Textblöcke nicht miteinander fluchten.

In Fig. 2 ist eine schematische Darstellung zur Strukturierung einer auszudruckenden Seite gezeigt. Eine solche Seite kann z. B. mit Hilfe eines Metallpapierdruckers bedruckt werden. Dieser Drucker soll einen Schreibkopf enthalten, der z. B. 32 übereinanderliegende in einer Spalte angeordnete Elektroden enthält. Durch jede Elektrode kann auf dem Aufzeichnungsträger eine punktförmige Aufzeichnung (im folgenden Bildelement = pel genannt) erzeugt werden. Der Schreibkopf 3 wird während eines ersten Durchlaufes 1 in angegebener Pfeilrichtung K quer über die Seite geführt. Die Informationsaufzeichnung soll in bestimmten Rasterpositionen möglich sein. Zur Vereinfachung sei angenommen, daß das Rastermuster aller möglichen Rasterpositionen auf der Seite einer Matrix aus untereinanderliegenden Punkt-Raster-Zeilen entspricht, wobei die einzelnen Bildelemente der untereinanderliegender Zeilen aufeinander ausgerichtet sind, so daß sich eine matrixförmige aus Punkt-Raster-Zeilen und Punkt-Raster-Spalten bestehende Struktur ergibt. Da der Schreibkopf 3 aus 32 übereinanderliegenden Schreibelektroden besteht, werden währen des Durchlaufes 1 auch 32 Punkt-Raster-Zeilen geschrieben. Die 32 Elektroden des Schreibkopfes sind in 4 jeweils 8 Elektroden umfassende Sektionen aufgeteilt. Die erste Elektrodensektion soll zuoberst des Schreibkopfes liegen, gefolgt von der zweiten, dritten und der zuunterst liegenden vierten Sektion. In Analogie zu dieser Aufteilung ist die Seite in einzelne streifenförmige Durchlaufabschnitte aufgeteilt. Jeder Durchlaufabschnitt (Seiten-Streifen) umfaßt 8 übereinanderliegende Punkt-Raster-Zeilen. Die einzelnen Seiten-Streifen sind mit P1, P2, P3 ... PN, P(n + 1), P(n + 2),... bezeichnet. Während des Durchlaufes 1 ist die erste Elektrodensektion dem Durchlaufabschnitt P1, die zweite Elektrodensektion dem Durchlaufabschnitt P2, die dritte Elektrodensektion dem Durchlaufabschnitt P3 und die vierte Elektrodensektion dem Durchlaufabschnitt P4 zugeordnet. Nach dem Durchlauf 1 wird der Elektrodenkopf entgegen der Pfeilrichtung K in seine Ausgangsposition links der Seite zurückbewegt, während der Aufzeichnungsträger (die Seite) um 4 Seiten-Streifen in Pfeilrichtung V vorgeschoben wird. Während des Durchlaufes 2 bewegt sich der Schreibkopf 3 wiederum in angegebener Pfeilrichtung K über die Seite, wobei die Seiten-Streifen P5, P6, P7 und P8 ausgegeben werden. In analoger Weise erfolgt die Informationsaufzeichnung in den Durchlaufabschnitten P9, P10, P11, P12 bzw. P(n + 5), P(n + 6), P(n + 7), P(n + 8) während der Durchläufe 3 bzw. n + 8/4.

Fig. 2a zeigt eine schematische auszugsweise Darstellung von Fig. 2 zur Kennzeichnung des Punktrasters. Jeder Seiten-Streifen besteht aus 8 übereinanderliegenden Punkt-Raster-Zeilen. Die Punkte (Bildelemente) untereinanderliegender Zeilen sind entsprechend aufeinander ausgerichtet, so daß sich die bereits erwähnte aus Zeilen und Spalten bestehende Matrixstruktur für eine Informationsaufzeichnung auf der Seite ergibt.

Es sei an dieser Stelle bereits darauf hingewiesen, daß als Aufzeichnungsmedium nicht nur eine mit Rasterinformation zu bedruckende Seite verstanden werden soll, sondern ebensogut auch eine Bildschirmfläche mit rasterförmiger Informationsaufzeichnung oder andere Aufzeichnungsmedien im Zusammenhang mit entsprechenden Aufzeichnungsverfahren.

Des weiteren sei auch darauf hingewiesen, daß die punktförmige Informationsaufzeichnung auch in einer Weise vorgenommen werden kann, die von der einfachen Darstellung gemäß Fig. 2a abweicht. So ist es z. B. denkbar, daß sich die einzelnen Bildelemente einander zu Erzielung besserer Zeichenkonturen überlappen können. Außerdem kann das erfindungsgemäße später beschriebene Fensterspeicher-Prinzip auch auf eine andere als in Fig. 2 gezeigte Strukturierung einer auszudruckenden Seite bezogen werden, bei der z. B. pro Durchlauf eines Rasterpunkte erzeugenden Schreibkopfes oder eines Schreibstrahles nur eine Rasterpunktzeile erzeugt wird. In diesem Zusammenhang sei auch erwähnt, daß zur Ausgabe von Punkt-Raster-Zeilen Kathoden- oder Laserstrahlen o. ä. verwendet werden können, welche einen Aufzeichnungsträger entsprechend überstreichen.

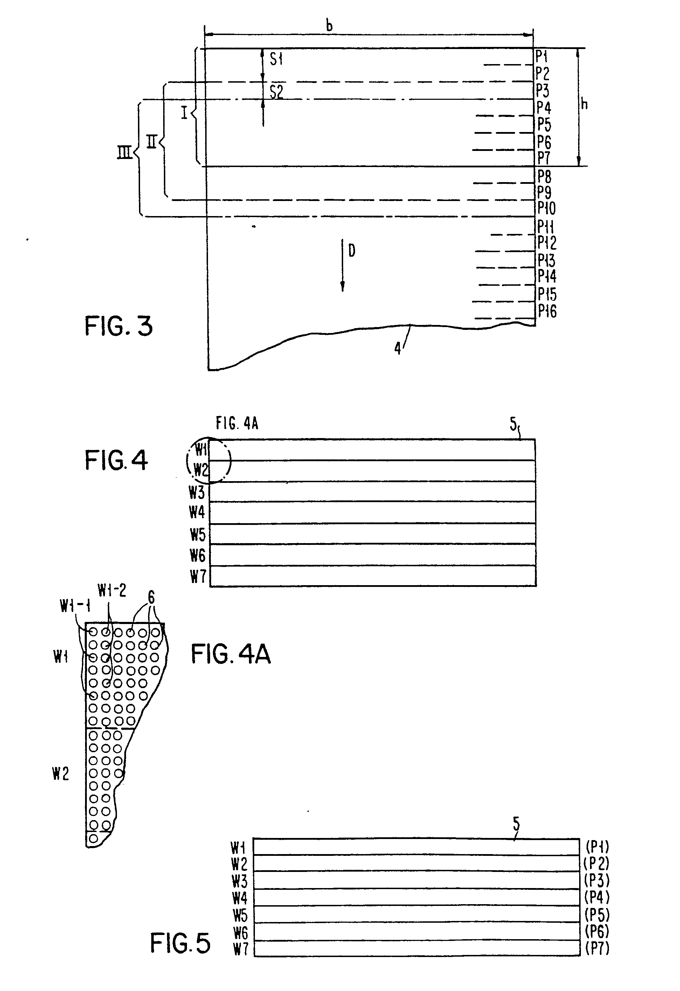

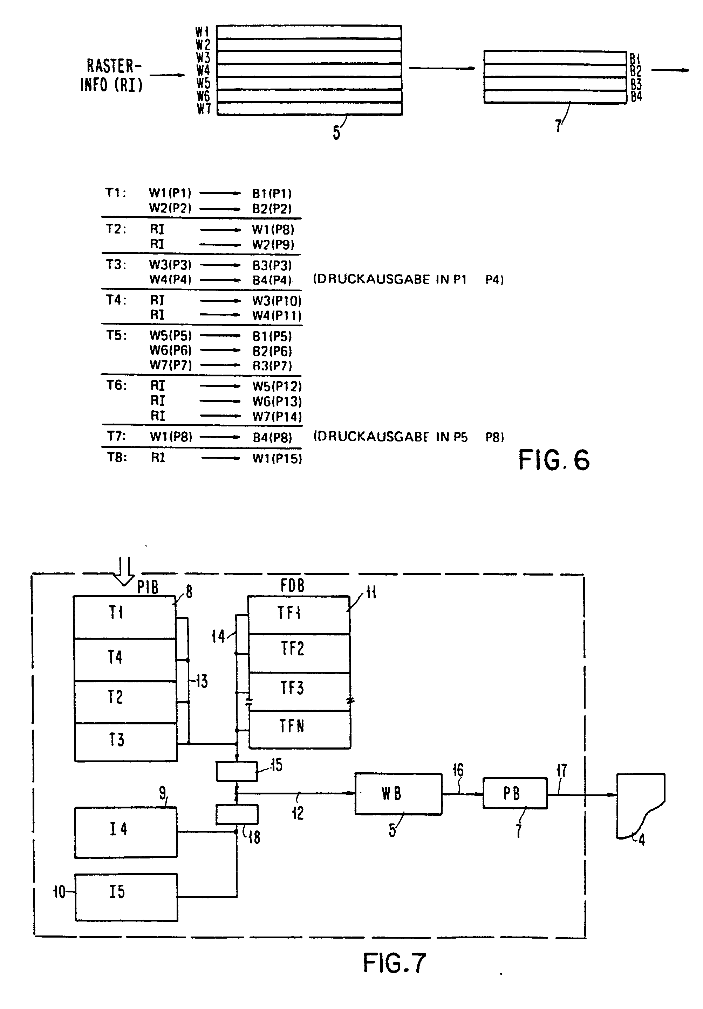

Der Aufteilung des Schreibkopfes in Sektionen zu je 8 Elektroden liegt im gewählten Ausführungsbeispiel die Bytestruktur der in diesem Zusammenhang verwendeten Datenverarbeitungsanlage zugrunde. Der Metallpapierdrucker wird zur Ausgabe von Punkt-Raster-Information datenmäßig von einer Datenverarbeitungsanlage gespeist. Diese Datenverarbeitungsanlage enthält gemäß der Fign. 4 und 7 einen sog. Fenster-Speicher (WB) 5. Dieser Fenster-Speicher 5 besteht aus einem matrixförmigen Feld (Fig. 4a) von Speicherzellen, im folgenden vereinfacht Bits genannt. Die Bitzahl einer Speicherzeile entspricht der Anzahl der möglichen Bildelemente einer Punkt-Raster-Zeile auf der Seite. Entsprechend der Strukturierung der Seite in 8 Bildelemente hohe Seiten-Streifen besteht der Fenster-Speicher 5 aus jeweils 8 Bits hohen Fenster-Speicher-Streifen W1, W2, W3 ... W7. Entsprechend der Struktur der Datenverarbeitungsanlage sind jeweils 8 übereinanderliegende Bits in einem Speicherstreifen als Byte (W1-1 ; W1-2) zusammengefaßt. In diesem Zusammenhang wird bei entsprechende Datenverarbeitungsanlagen auch von einer Bytestruktur gesprochen.

Im gewählten Ausführungsbeispiel soll aus Vereinfachungsgründen der Fenster-Speicher 5, der zur Aufbereitung der Druckdaten benutzt wird, 7 Fenster-Speicher-Streifen umfassen. An späterer Stelle wird ausgesagt, welche Höhe (Anzahl der Fenster-Speicher-Streifen) der Fensterspeicher 5 in Abhängigkeit von der Höhe der auszudruckenden Zeichen haben muß. Würde der Fensterspeicher so groß gewählt werden, um die gesamte Punkt-Raster-Information einer Seite aufzunehmen, so würde dies einen unzumutbaren Speicherbedarf bedingen.

Aus diesem Grunde soll die Aufbereitung der Druckdaten für die Seite in besonderer Weise erfolgen, wobei nur ein relativ geringer Speicherbedarf erforderlich ist. Zu diesem Zweck ist der relativ kleine Fenster-Speicher 5 vorgesehen, in dem die Druckdaten immer nur für eine relativ kleine Anzahl von Seiten-Streifen aufbereitet werden. Mit anderen Worten : wenn die Seite z. B. 825 Seiten-Streifen umfaßt, ist es unter Berücksichtigung bestimmter Bedingungen möglich, den Fenster-Speicher 5 z. B. auf nur insgesamt 7 Speicher-Streifen auszulegen. Auf diese Weise wäre zur Aufbereitung der Druckdaten für eine Seite mit z. B. 33 Millionen Rasterpositionen nur ein Fenster-Speicher 5 mit insgesamt 0,28 Millionen Bitpositionen erforderlich, was eine enorme Speicherplatzeinsparung bedeutet.

In Fig. 3 ist eine schematische Darstellung des sogenannten Fenster-Prinzips bei der Ausgabe von Druckinformation auf die Seite gezeigt. Wie bereits erwähnt, hat der Fenster-Speicher 5 sieben Fenster-Speicher-Streifen W1 bis W7 und eine Zeilenlänge mit so vielen Bits, wie es der Anzahl der Rasterpunkte in einer Punkt-Raster-Zeile der Seite entspricht. Für eine vereinfachte, verständlichere Darstellung soll gesagt werden : der Fensterspeicher hat eine Höhe h, die insgesamt sieben Seiten-Streifen (z. B. P1 bis P7) der Breite b abdeckt. Angenommen, die Druckdatenaufbereitung im Fenster-Speicher 5 sei in den Fenster-Speicher-Streifen W1 bis W7 erfolgt, denen die Seiten-Streifen P1 bis P7 zugeordnet sind (Fensterposition I). Danach ist es denkbar, den Inhalt der oberen zwei Fenster-Speicher-Streifen W1 und W2 aus dem Fenster-Speicher 5 in den Pufferspeicher 7 zu übertragen und die dadurch freigewordenen Fenster-Speicher-Streifen W1 und W2 zur Druckaufbereitung neuer Druckdaten, z. B. für die Seiten-Streifen P8 und P9 zu verwenden. Hierbei müßten natürlich zu diesem Zeitpunkt die beiden Fenster-Speicher-Streifen W1 und W2 eine entsprechende Zuordnung zu den Seiten-Streifen P8 und P9 erfahren (Fensterposition II).

Nach erfolgter Druckaufbereitung für diese Seiten-Streifen P8 und P9 ist es denkbar, daß nunmehr auch der Inhalt des dritten Fenster-Speicher-Streifen W3 in den Pufferspeicher 7 gestellt wird und daß der dadurch freiwerdende Fenster-Speicher-Streifen W3 nunmehr zur Druckaufbereitung für den Seiten-Streifen P10 benutzt wird. Dazu ist der Fenster-Speicher-Streifen W3 dem Seiten-Streifen P10 zuzuordnen.

Zu bestimmten Zeiten wird die in den Pufferspeicher 7 übertragene Information auf einmal auf die Seite ausgedruckt. Die Aufbereitung der Druckdaten erfolgt immer nur für einen sogenannten Fensterbereich der Höhe h und der Breite b. Für die Aufbereitung der Druckdaten im Fensterbereich steht der Fenster-Speicher in angegebener Weise zur Verfügung. Der Fensterbereich verschiebt sich auf der Seite in Pfeilrichtung D von oben nach unten, als würde sich ein Spalt der Abmessung h · b von oben nach unten über die Seite bewegen und nacheinander unterschiedliche Fensterposition I, II, II einnehmen. Die Aufbereitung der Druckdaten erfolgt somit immer nur für eine Fensterposition ; die Verschiebung von einer Fensterposition in die andere wird nur dadurch möglich, daß zuvor der Inhalt bestimmter Fenster-Speicher-Streifen im Pufferspeicher 7 zwischengespeichert wird (für eine spätere Druckausgabe) und die dadurch freiwerdenden Fenster-Speicher-Streifen zur Aufnahme und Aufbereitung neuer Druckdaten für Folgestreifen auf der Seite zur Verfügung stehen.

In Fig. 3 ist die Verschiebung des Fensters von der Fensterposition I in die Fensterposition II mit S1 und die Verschiebung von der Fensterposition II in die Fensterposition III mit S2 gekennzeichnet. Entsprechend dem zuvor gegebenen Ausführungsbeispiel umfaßt S1 die Höhe zweier Seiten-Streifen, nämlich P1 und P2, und S2 die Höhe des Seiten-Sreifens P3.

In Fig. 5 ist eine schematische Darstellung des Fenster-Speichers 5 mit zu sieben Fenster-Speicher-Streifen W1 bis W7 zusammengefaßten Bitzeilen gezeigt. Die Fenster-Speicher-Streifen W1 bis W7 erfahren entsprechend der Fensterposition I in Fig. 3 eine entsprechende Zuordnung zu den Seiten-Streifen P1 bis P7 der Druckseite.

In Fig. 6 ist eine schematische Darstellung zum Informationsfluß zwischen dem Fenster-Speicher 5 und dem Pufferspeicher 7 sowie zur Aufnahme von Information in den Fenster-Speicher und zur Ausgabe von Information in den Pufferspeicher gezeigt. Mit Hilfe dieser Darstellung werden die zur Erläuterung von Fig. 3 gemachten Hinweise bezüglich der « Verschiebung » des Fensters über die Druckseite verständlicher :

Die Fenster-Speicher-Streifen, jeweils 8 übereinanderliegende Bitzeilen umfassend, sind mit W1 bis W7 gekennzeichnet. Der Pufferspeicher 7 besteht aus 4 Pufferspeicherstreifen B1 bis B4. Jeder dieser Streifen ist so ausgelegt, daß er den Inhalt eines Fenster-Speicher-Streifens aufnehmen kann. Sobald der Pufferspeicher 7 vollends mit aufbereiteter Druckinformation gefüllt ist, erfolgt eine Weiterleitung seines Inhalts für eines Druckausgabe. Im Zusammenhang mit Fig. 2 ist leicht zu erkennen, daß dieser Pufferspeicher 7 die Druckinformation für jeweils einen Durchlauf des Schreibkopfes zur Verfügung stellt (entsprechend den 32 übereinanderliegenden Elektroden des Schreibkopfes 3 enthält der Pufferspeicher 32 übereinanderliegende Bitzeilen. Jede Bitzeile ist eine Elektrode zur Ausgabe der entsprechenden Raster-Punktinformation zugeordnet.

Angenommen, Druckinformation sei im Fenster-Speicher 5 aufbereitet worden und die Fenster-Speicher-Streifen W1, W2, W3 bis W7 seien den Seiten-Streifen P1 bis P7 zugeordnet worden (Fensterposition I).

Im folgenden wird erklärt, in welchen Schritten die Druckausgabe und die Druckaufbereitung neuer Druckdaten für die auf den Seiten-Streifen P7 folgenden Seiten-Streifen erfolgt.

Während eines Zeitraumes T1 wird der Inhalt von W1 (P1 zugeordnet) nach B1 (P1 zugeordnet) und der Inhalt von W2 (P2 zugeordnet) nach B2 (P2 zugeordnet) übertragen. Damit ist die Information für P1 und P2 zwischengespeichert und W1 und W2 stehen zur Druckaufbereitung neuer Druckdaten für die Seiten-Streifen P8 und P9 zur Verfügung. Während eines Zeitraumes T2 werden entsprechend neue Druckdaten RI nach W1 (jetzt P8 zugeordnet) und W2 (jetzt P9 zugeordnet) übertragen. Damit ist der Fensterspeicher 5 wieder « gefüllt ».

Während eines Zeitraumes T3 wird nun der Inhalt von W3 (P3 zugeordnet) nach B3 (P3 zugeordnet) und der Inhalt von W4 (P4 zugeordnet) nach B4 (P4 zugeordnet) übertragen. Danach ist der Pufferspeicher 7 in allen seinen Streifen B1 bis B4 vollends mit Information « gefüllt », so daß nunmehr einer Druckausgabe seines Inhalts in den Seiten-Streifen P1 bis P4 während des Durchlaufes I erfolgen kann.

(Es sei an dieser Stelle ausdrücklich darauf hingewiesen, daß die Darstellung in Fig. 3 zur Verschiebung des Fensters nichts mit dem Ausdrucken der Information während der einzelnen Durchläufe zu tun hat).

Wie bereits erwähnt, erfolgt eine Druckausgabe immer dann, wenn die 4 Pufferspeicherstreifen mit Information « gefüllt » sind und ein Durchlauf des Schreibkopfes vollzogen werden kann. Die in Fig. 3 gezeigte Fensterverschiebung ist mit einer Änderung der Zuordnung von den Fenster-Speicher-Streifen zu den Seiten-Streifen zu vergleichen. Nach erfolgter Übertragung des Inhaltes von W3 auf W4 in den Pufferspeicher 7 stehen nunmehr diese Fenster-Speicher-Streifen W3 und W4 zur Aufnahme neuer Druckdaten RI während des Zeitraumes T4 zur Verfügung. Dabei wird nunmehr W3 zu P10 und W4 zu P11 zugeordnet. Der Fenster-Speicher ist nun wieder vollends gefüllt, und der Inhalt bestimmter Fenster-Speicher-Streifen kann in den Pufferspeicher 7 übertragen werden, der jetzt nach erfolgter Druckausgabe für den Durchlauf I zur Aufnahme neuer Druckdaten zur Verfügung steht. Es soll z. B. während T5 der Inhalt von W5 (P5 zugeordnet) nach B1 (P5 zugeordnet), der Inhalt von W6 (P6 zugeordnet) nach B2 (P6 zugeordnet) und der Inhalt von W7 (P7 zugeordnet) nach B3 (P7 zugeordnet) übertragen werden. Damit stehen nunmehr die Fenster-Speicher-Streifen W5, W6 und W7 zur Aufnahme neuer Druckdaten RI während des Zeitraumes T6 zur Verfügung. Dabei werden diese Fenster-Speicher-Streifen den Seiten-Streifen P12, P13 und P14 zugeordnet. Damit ist der Fenster-Speicher wieder vollends mit Information « gefüllt ». Während des Zeitraumes T7 soll nun der Inhalt von W1 (P8 zugeordnet) nach B4 (P8 zugeordnet) übertragen werden. Damit ist jedoch der Pufferspeicher 7 wieder vollends mit Information « gefüllt » und eine Druckausgabe während des Durchlaufes II für die Seiten-Streifen P5 bis P8 kann erfolgen. Durch die vorhergehende Übertragung des Inhaltes von W1 in den Pufferspeicher 7 (T2 : RI→W1(P8) und Druckausgabe in T7 steht nunmehr dieser Fenster-Speicher-Streifen zur Aufnahme neuer Druckdaten RI während des Zeitraumes T8 zur Verfügung, wobei nunmehr dieser Fenster-Speicher-Streifen W1 dem Seitenstreifen P15 zugeordnet wird. etc.

Das in Zusammenhang mit Fig. 6 gegebene Beispiel zum Informationsfluß zwischen dem Fensterspeicher 5 und dem Pufferspeicher 7 soll zunächst nur verdeutlichen, daß die Übertragung des Inhaltes von Fenster-Speicher-Streifen in den Pufferspeicher in zyklischer Folge W1, W2 ... W7, W1, W2 ... W7 usw. erfolgt. die Übertragung erfolgt streifenweise, wobei auch mehrere Streifen zeitlich unmittelbar nacheinander übertragen werden können, aber auch die Übertragung eines oder mehrerer Streifen in zeitlich unterbrochenen Zeitabschnitten erfolgen kann.

Das in Fig. 6 gegebene Beispiel soll ferner andeuten, daß eine Druckausgabe immer dann erfolgt, wenn der Pufferspeicher 7 vollends mit Druckdaten für einen Durchlauf geladen wurde.

Besonders wichtig zum Verständnis des Fenster-Prinzipes ist die zyklische Zuordnung des Fenster-Speicher-Streifen W1, W2 ... W7, W1, W2 ... W7 zu den Seiten-Streifen P1, P2, P3 ... Pn, P(n + 1), P(n + 2), P(n + 3), ... usw. Immer wenn der Inhalt einer oder mehrerer Fenster-Speicher-Streifen in den Pufferspeicher übertragen wurde, stehen diese zur Aufnahme neuer Druckaten für die bisher noch nicht erfaßten Folge-Seiten-Streifen zur Verfügung, so daß hier die «Verschiebung» des Fensters über die Seite in Pfeilrichtung D (in die verschiedenen Fensterpositionen) besonders deutlich wird.

Über die Bedingungen, wann der Inhalt von einem oder von mehreren Fenster-Speicher-Streifen in den Pufferspeicher zu übertragen ist, wird an anderer Stelle genaueres ausgesagt.

In Fig. 7 ist eine schematische Darstellung des Informationsflusses für eine Druckdatenaufbereitung gezeigt. Es wird von codiert gespeicherter Textinformation und rasterpunktweise (unkomprimiert oder komprimiert) gespeicherter Bildinformation ausgegangen unter Hinzuziehung eines Schriftartsspeichers 11 zur Abgabe von Rasterpunktinformatione für die einzelnen durch Codes gekennzeichneten Zeichen.

Die Textblöcke T1, T4, T2, T3 werden blockweise in beliebiger Reihenfolge in den Seiten-Eingabe-Speicher (PIB) 8 durch einen externen Datenstrom in die Datenverarbeitungsanlage eingegeben. Jeder Textblock enthält die Zeichen in codierter Form (also nicht in bitweise strukturierter Raster-Form) ; außerdem enthält jeder Textblock Steuerinformationen, z. B. die Koordinate, an welcher Stelle der Seite er anzuordnen ist, oder welche Schriftarten und -größen für die Zeichen zu wählen sind.

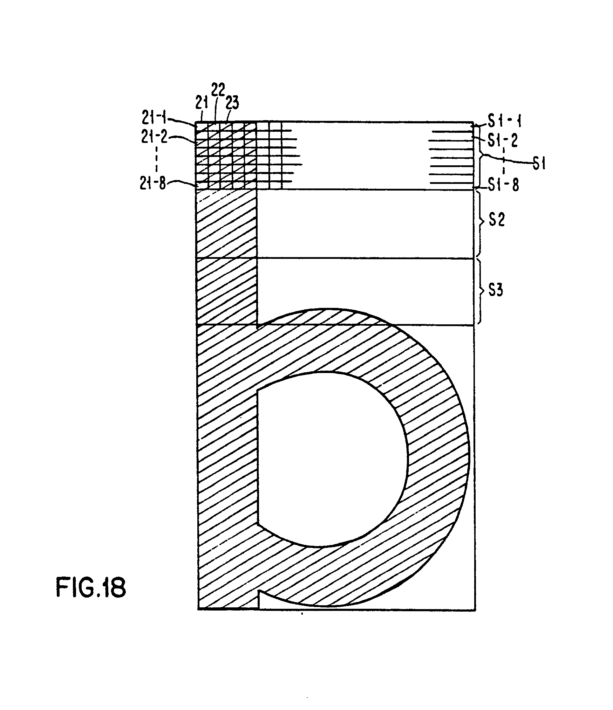

In dem Schriftart-Speicher 11 werden die entsprechenden Bits für die Rasterpunktdarstellungen der einzelnen Zeichen für verschiedene Schriftarten gespeichert. Durch den Code jedes einzelnen Zeichens in den Textblöcken kann über den Weg 13 und 14 auf die Bitstruktur des Zeichens im Schriftartenspeicher (FDB) 11 zugegriffen werden. Um Speicherplatz zu sparen, werden die Zeichen im Schriftartspeicher 11 komprimiert gespeichert, so daß vor einer Aufbereitung der Druckdaten im Fenster-Speicher 5 eine Dekomprimierung 15 der Rasterpunktinformation für die einzelnen Zeichen erforderlich ist. Eine solche Dekomprimierung kann unter Berücksichtigung entsprechender Komprimierungs-/Dekomprimierungsschritte von einer entsprechenden Schaltung oder per Programm vollzogen werden. Einzelheiten zu einer solchen Komprimierung/Dekomprimierung werden im Zusammenhang mit Fig. 18 erläutert. In den Seiten-Eingabe-Speicher 8 können neben Textblöcken auch bitweise gespeicherte Bildblöcke (komprimiert oder unkomprimiert) aufgenommen werden. Bildblöcke können auch außerhalb des Seiten-Eingabe-Speichers 8 an anderer Stelle der Datenverarbeitungsanlage verfügbar gehalten werden. Bei sehr großen Bildern (extrem hoher Speicherbedarf wegen der hohen Rasterpunktzahl) werden die Bilder auf externen Speichern gespeichert. Die Bilder werden nur partiell im Arbeitsspeicher der Datenverarbeitungsanlage verfügbar gehalten. Die Bildblöcke (z. B. der mit 9 gekennzeichnete Bildblock 14 oder der mit 10 gekennzeichnete Bildblock 15) enthalten ebenso wie Textblöcke Steuerinformationen, insbesondere mit Angaben der Koordinaten für ihre Anordnung auf der Seite. Beim Eingeben der Text- bzw. Bildblöcke in die Datenverarbeitungsanlage ist durch die Koordinaten der einzelnen Blöcke auch das Layout der Seite festgelegt. Entsprechend dem vorgegebenen Layout wird auf die einzelnen Blöcke, soweit sie zur aktuellen Fensterposition einen Beitrag liefern, zugegriffen. Für jeden Text- oder Bildblock wird durch ein Programm ein sogenannter Blockindex erstellt, der z. B. Angaben zu den Koordinaten, an welcher Stelle der Seite der Block auszugeben ist, und einen sogenannten Adreßzeiger enthält, durch den auf den Teil des Blockes verwiesen wird, der für die Druckaufbereitung zu einem aktuellen Zeitpunkt gerade von Interesse ist. Außerdem enthält der Blockindex auch einem sogenannten « Fenster »-Zeiger, der den Hinweis liefert, ob ein entsprechender Block, und wenn ja, welcher Teil von ihm einen Beitrag für eine bestimmte Fensterposition liefert.

Würde einer Druckausgabe der Layout-Plan gemäß Fig. 1 zugrunde liegen, so ist leicht zu erkennen, welche der Text- bzw. Bildblöcke zu verschiedenen gedachten Fensterpositionen einen Beitrag liefern würden : für die ersten Fensterpositionen wären es die nebeneinanderliegenden Textblöcke T1 und T3 ; für dann folgende Fensterpositionen wären es der Textblock T1, der Bildblock I4 und der Textblock T2 ; bei späteren Fensterposition der Textblock T1, T4 und T2 während für die letzten Fensterpositionen auf der Seite lediglich der Bildblock 15 einen Beitrag liefern würde.

Angenommen die Textblöcke T1 und T3 würden für die ersten Fensterpositionen einen Beitrag liefern. Durch den Layout-Plan sowie durch entsprechende Adreßsteuerinformation sei sichergestellt, an welcher Stelle der Seite die einzelnen Zeichen (einer bestimmten Schriftart und einer bestimmten-größe) innerhalb der aktuellen Fensterposition wiederzugeben sind.

Dies wird z. B. dadurch möglich, daß die Grundlinie einer Zeichenzeile einer bestimmten Punktrasterzeile der Seite zugeordnet wird und daß für die Zeichenfolge innerhalb der Zeichenzeile die Breitenabmessungen der Zeichen und die Zeichenabstände bekannt sind.

Jede Stelle des Fenster-Speichers (WB) 5 kann wahlweise adressiert werden. Dadurch wird es möglich, die Zeichen der einzelnen Textblöcke, die einen Beitrag für eine Fensterposition liefern, in den Fenster-Speicher 5 zu laden. Darunter soll folgendes verstanden werden : das Zeichen ist zunächst nur durch seinen Zeichencode gekennzeichnet und es liegt eine Positionsangabe vor, an welche Stelle des Fenster-Speichers es für eine bestimmte Fensterposition zu setzen ist. Damit ist die bitweise rasterpunktgetreue Zeichendarstellung gemeint. Aufgrund des Zeichencodes im Textblock kann (direkt oder indirekt) zur Rasterpunktdarstellung des entsprechenden Zeichens (je nach Schriftart und Schriftgröße) im Schriftartspeicher (FDB) 11 Zugriff genommen werden. Dort sind die einzelnen Schriftartensätze mit TF1, TF2, TF3 ... TFN gekennzeichnet. Zweckmäßigerweise wird die bitweise Rasterpunktdarstellung für die einzelnen Zeichen im Schriftartspeicher 11 in einer komprimierten Form vorliegen, so daß wie bereits erwähnt wurde, eine Dekomprimierung 15 erfolgen muß. Als Ergebnis dieser Dekomprimierung wird die vollständige Rasterpunktinformation für das Zeichen erzeugt, und über die Leitung 12 in die davor vorgesehene Stelle des Fenster-Speichers geladen. Die Textblöcke oder Teile davon werden also zeichenweise in den Fenster-Speicher übertragen. Für eine zweckmäßige Übertragung eines Bildblockes oder von Teilen davon in den Fenster-Speicher ist der Bildblock matrixförmig in kleinere zugriffsfähige Einheiten (Bildblockfelder) aufgeteilt.

Ist die Bildblockinformation komprimiert gespeichert, so muß jedes Bildblockfeld vor seiner Übertragung in den Fenster-Speicher noch dekomprimiert werden.

Wie eine solche komprimierte Rasterpunktdarstellung eines Zeichens (bzw. eines Bildblockfeldes) vorgenommen werden kann, geht aus Fig. 18 hervor. Das Zeichen wird in ein dieses begrenzende Rechteck (« tight box ») gestellt. Das Rechteck ist in einzelne übereinanderliegende Streifen S1, S2, S3 ... aufgeteilt. Jeder Streifen besteht aus acht übereinanderliegenden Zeilen S1-1 bis S1-8. Außerdem ist das Rechteck durch vertikal verlaufende die Zeilen schneidende Linien matrixartig aufgeteilt. Jeweils 8 untereinanderliegende Matrixelemente (21-1 bis 21-8) in einem Streifen (S1) sind den 8 Bits eines Bytes (21, 22, 23) zugeordnet.

Die Kompression eines solchen Zeichens bezieht sich auf die Bytes in Pfeilrichtung in der Reheinfolge aufsteigender Streifen. Haben die Bits eines Bytes nicht alle den gleichen Inhalt (z. B. binäre « O » für weiß ; binäre « 1 » für schwarz), so werden die Bits dieses Bytes nicht komprimiert. Haben hingegen die Bits eines Bytes alle den gleichen Inhalt (alle « O » oder alle « 1 »), so wird komprimiert, in dem lediglich vermerkt wird (Byte mit alles « O » oder « Byte mit alles « 1 » Abführung). Für aufeinanderfolgende Bytes identischen Inhalts wird lediglich hinter der Eintragung für das erste dieser Bytes die Anzahl der identischen Folgebytes vermerkt. Analog dazu können die einzelnen Bildblockfelder eines Bildblockes komprimiert werden.

Unter Kenntnis dieses Komprimierungsprinzips kann eine entsprechende Dekomprimierung vorgenommen werden.

Die Druckinformation wird aus dem fenster-Speicher (WB) 5 auf dem Weg 16 in den Pufferspeicher (PB) 7 für eine spätere Druckausgabe über den Weg 17 auf der Seite 4 übertragen.

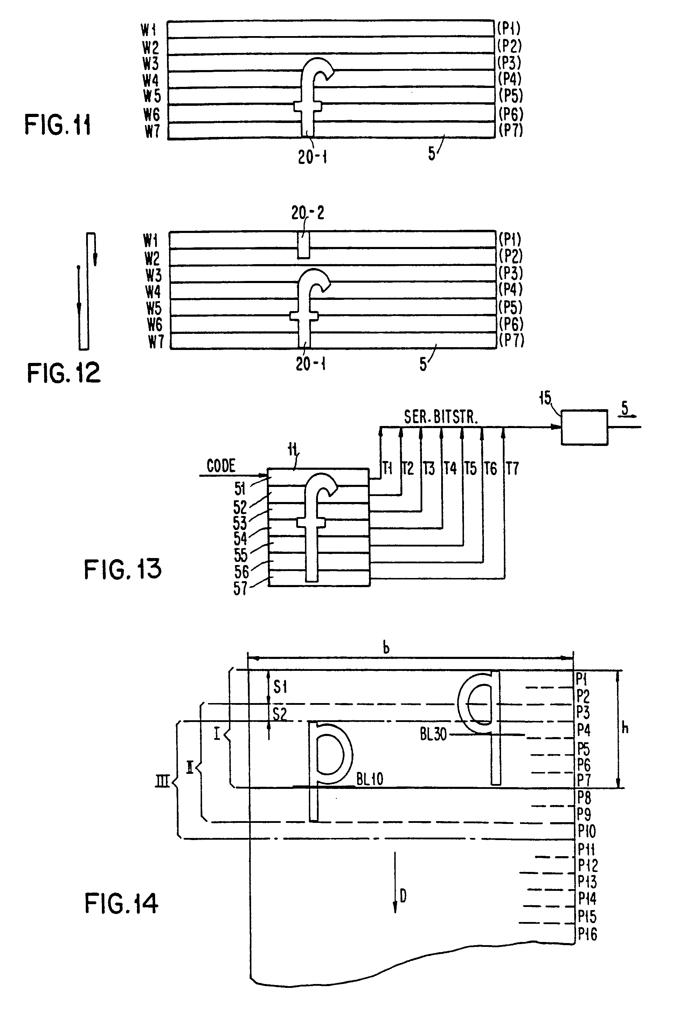

In Fig. 13 ist eine schematische Darstellung für eine gedachte ununterbrochene Übertragung der Rasterpunktinformation für ein Zeichen aus dem Schriftartspeicher 11 in den Fenster-Speicher 5 gezeigt.

Es sei angenommen, daß z. B. aufgrund des Zeichencodes für das Zeichen f auf seine komprimierte Rasterpunktinformation (auf die rasterpunktweise Darstellung des Zeichens wird verzichtet ; es wird lediglich die äußere Umrandung des Zeichens angegeben) zugegriffen werden kann, die durch Dekomprimierung 15 in eine vollständige rasterpunktdarstellung überführt wird.

Wenn man eine streifenförmige Aufteilung (51 bis 57) des Zeichens unterstellt (Fig. 18) und eine entsprechende Adressierungsmöglichkeit voraussetzt, so ist es denkbar, zu der Rasterpunktinformation des Zeichens f segmentweise (streifenweise) Zugriff zu nehmen. Dies würde es ermöglichen, während eines Zeitraumes T1 die Rasterinformation für den Streifen S1 abzurufen, während eines anderen Zeitraumes T2 zur Rasterinformation des Streifens S2 Zugriff zu nehmen etc. Für den Fall, daß diese Zeiträume T1 und T2 zeitlich nicht einander anschließen, soll im folgenden von einem unterbrochenen Zugriff ansonsten von einem ununterbrochenen Zugriff gesprochen werden. Ein solcher unterbrochener Zugriff soll bei dem erfindungsgemäßen Fenster-Prinzips aus Zeitgründen unbedingt vermieden werden : der Schriftartspeicher 11 hat bei einer großen Zahl von verschiedenen Schriftarten und -größen einen enormen Kapazitätsbedarf. Aus diesem Grunde wird er auf einem externen Datenspeicher untergebracht sein und immer nur partiell im Arbeitsspeicher der Datenverarbeitungsanlage verfügbar gehalten werden.

Bei der Aufbereitung der Druckdaten kann jedoch ein häufiger Schriftartwechsel bzw. eine Änderung der Schriftgröße zu berücksichtigen sein.

Würde nun auf die Rasterinformation eines Zeichens nicht ununterbrochen zugegriffen werden, so ergäbe sich ein unerwünschter zeitlicher Nachteil.

Beispiel

Nur auf die Hälfte der Rasterinformation eines Zeichens wird zugegriffen. Dann erfolgen andere Vorgänge, z. B. Wechsel eines Schriftartensatzes im Arbeitsspeicher. Soll nun zu einem späteren Zeitpunkt auf die noch fehlende Hälfte der Rasterinformation des Zeichens zugegriffen werden, so ist dazu erst wieder der betreffende Schriftartensatz aus dem externen Schriftartenspeicher in den Arbeitsspeicher der Datenverarbeitungsanlage zu laden. Der mit dem Laden verbundene zeiliche Nachteil kann vermieden werden, wenn von vornherein auf einmal, also in zeitlich nicht unterbrochenen Zeitabschnitten auf die Rasterinformation des Zeichens zugegriffen wird.

In der Forderung, den Bitdatenstrom für die Rasterpunktdarstellung eines Zeichens in einer ununterbrochenen Übertragungsfolge in den Fenster-Speicher zu laden, liegt aber auch die Forderung, den Fenster-Speicher genügend « hoch » zu machen (ihm eine entsprechende Anzahl von Bitzeilen zu geben), damit er das gesamt Zeichen hinsichtlich seiner Zeichenhöhe aufnehmen kann. Auf diese Weise wird die Mindesthöhe des Fenster-Speichers von der Zeichenhöhe bestimmt.

Zur Vermeidung von Mißverständnissen sei betont, daß die « Höhe » des Fenster-Speichers im voraus für z. B. eine Seite festgelegt wird und daß dabei das größte auf der Seite vorkommende Zeichen maßgebend ist.

Diese Vorausbestimmung ist möglich, weil mit dem Anliefern der Textblöcke an die Datenverarbeitungsanlage z. B. auch Informationen zur Zeichenhöhe verbunden sind. Dadurch ist es leicht, z. B. per Programm die maximale Zeichenhöhe für eine Seite im voraus zu bestimmen.

Es gibt jedoch noch eine Vielzahl von anderen Gründen, den Speicher noch « höher » zu machen, als es für die absolute Höhe eines Zeichens erforderlich wäre. Einer der Gründe liegt darin, daß das obere und untere Zeichenende nicht immer mit einer Seiten-Streifen-Grenze zusammenfallen muß : andere Gründe werden später noch ausführlich erörtert.

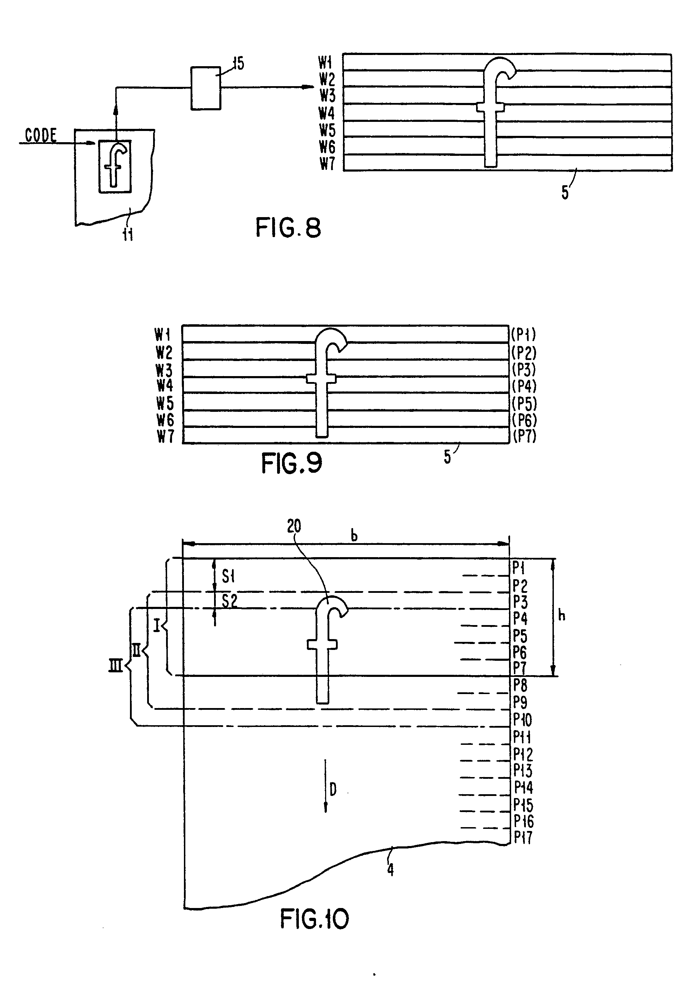

In Fig. 8 ist eine schematische Darstellung zur Übertragung der Rasterpunktinformation für das Zeichen f aus dem Schriftartspeicher 11 in den Fenster-Speicher 5 gezeigt. Aufgrund des Zeichencodes für das Zeichen f wird eine bestimmte Stelle des Schriftartspeichers 11 adressiert, an der die (komprimierte) Rasterpunktinformation für dieses Zeichen f gespeichert ist.

Nach Abruf der komprimierten Rasterpunktinformation für das Zeichen f findet eine Dekomprimierung 15 dieser Rasterpunktinformation und deren Übertragung an die dafür vorgesehen Stelle des Fenster-Speichers 5 statt.

Da der Fenster-Speicher 5 wahlweise adressierbar ist, ist daher auch die Übertragung der Rasterpunktinformation für ein Zeichen in den Fenster-Speicher mit Hilfe einer entsprechenden Adreßkettung durchführbar. Die einzelnen Fenster-Speicher-Streifen (W1 bis W7) werden entsprechenden Seiten-Streifen zugeordnet. Angenommen, das Zeichen f solle (analog zu Fig. 9) in der Mitte der Seite erscheinen und sich hinsichtlich seiner Höhe über die Seiten-Streifen P1 bis P7 erstrecken. In einem solchen Fall würde der Fenster-Speicher-Streifen W1 im Seiten-Streifen P1, und W2 würde P2, ... W7 würde P7 zugeordnet werden wie es in Fig. 9 gezeigt ist.

Es sei an dieser Stelle bemerkt, daß aus Vereinfachungsgründen hier nur die Übertragung eines Zeichens in dem Fenster-Speicher aufgeführt ist.

In Fig. 10 sol ein anderer Fall betrachtet werden, in dem das Zeichen f entsprechend der Fensterposition II auf der Seite auszugeben ist. Die höhe des Zeichens erstreckt sich über die Seiten-Streifen P3 bis P9. Würde der Fenster-Speicher 5, entsprechend der Darstellung in Fig. 11, die Zuordnung W1 ≙ P1, W2 ≙ P2, W3 ≙ P3, W4 ≙ P4 ... W7 ≙ P7 (Fensterposition I in Fig. 10) erfahren, so könnte das Zeichen f 16 (Fig. 10) nur zum Teil 20-1 (Fig. 11) in den Fenster-Speicher geladen werden ; ein Teil seiner Unterlänge bliebe unberücksichtigt.

Dieser Umstand widerspräche jedoch der Forderung, daß das Zeichen in einem « Schwung » in den Fenster-Speicher übertragen werden soll.

Aus diesem Grunde wird folgendes gemacht : gemäß Fig. 12 wird der Inhalt der Fenster-Speicher-Streifen W1 und W2 vor dem Laden des Zeichens f in den Fenster-Speicher in den Pufferspeicher 7 für eine spätere Druckausgabe übertragen. Diese Fenster-Speicher-Streifen W1 und W2 stehen jetzt zur Aufnahme neuer Druckdaten zur Verfügung. Aus diesem Grunde wird nun dem Fenster-Speicher-Streifen W1 der Seiten-Streifen P8, und dem Fenster-Speicher-Streifen W2 der Seiten-Streifen P9 zugeordnet. Die Zuordnung W3 = P3 bis W7 = P7 bleibt erhalten.

Dadurch ist jetzt der Fenster-Speicher 5 der Fensterposition II (Fig. 10) zugeordnet und das Zeichen f kann in einem « Schwung » in den Fenster-Speicher 5 geladen werden. Dabei kommt bildlich gesehen im Fenster-Speicher (5) die Unterlänge 20-2 des Zeichens f 20 über dem oberen Teil 20-1 des Zeichens f zu liegen.

An diesem Beispiel wurde verdeutlicht, daß für das Laden eines Zeichens folgendes zu beachten ist :

bestimmte Fenster-Speicher-Streifen, die bereits mit Druckdaten aufbereitet sind, werden in den Ausgabepuffer übertragen. Dadurch werden diese Fenster-Speicher-Streifen frei zur Aufnahme neuer Druckdaten für die Folge-Seiten-Streifen einer neuen Fensterposition. Das in dieser neuen Fensterposition liegende Zeichen kann unter entsprechender Neuzuordnung der Fenster-Speicher-Streifen zu den Seiten-Streifen vollends in einem « Schwung » in den Fenster-Speicher übertragen werden.

In Fig. 14 ist eine schematische Darstellung zur Ausgabe der Zeichen p und q mit unterschiedlichen Grundlinienhöhen gezeigt. Es sei angenommen, das Zeichen p gehöre zu einem Textblock T1 auf dem linken Teil der Seite und das Zeichen q gehöre zu einem Textblock T3 auf dem rechten Teil der Seite. Das Zeichen p solle eine Grundlinie BL10 haben ; das Zeichen q eine Grundlinie BL30. Beide Grundlinien sollen nicht miteinander fluchten, die Grundlinie des Zeichens q soll höher liegen als die Grundlinie des Zeichens p. Des weiteren sei angenommen, daß das Fenster hoch genug ist, um je nach Fensterposition je eines dieser Zeichen vollends aufzunehmen. (Aus Vereinfachungsgründen seien Zeichen mit Oberlängen an dieser Stelle nicht betrachtet). Das Zeichen q (es erstreckt sich von P1 bis P7) soll also in der Fensterposition I (P1 bis P7) vollends vom Fenster-Speicher aufgenommen werden können ; das Zeichen p soll in der Fensterposition II (P3 bis P9) vom Fenster-Speicher ebenfalls aufgenommen werden können.

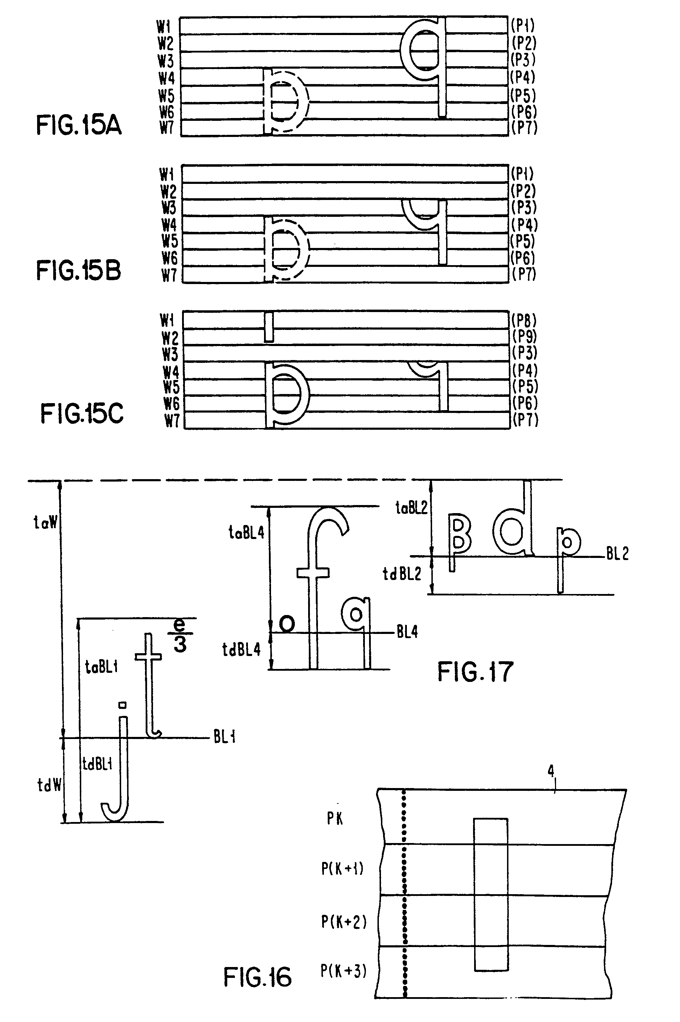

Anhand der Darstellungen in den Fign. 15a, 15b und 15c wird gezeigt, wie das Laden der Zeichen q und p in den Fenster-Speicher erfolgt. Die Darstellung in Fig. 15a entspricht der Fensterposition I. (d. h., die Fenster-Speicher-Streifen W1 bis W7 sind den Seiten-Streifen P1 bis P7 zugeordnet). Für diese Fensterposition I wird das Zeichen q an die dafür vorgesehenen Stellen des Fenster-Speichers übertragen. Eine vollständige Übertragung des Zeichens p in den Fenster-Speicher für die Fensterposition I ist nicht möglich. Aus diesem Grunde ist in Fig. 15a der obere Teil des Zeichens p nur gestrichelt angedeutet. Nach Übertragung des Zeichens q in den Fenster-Speicher für die Fensterposition I wird der Inhalt der Fenster-Speicher-Streifen W1 bis W2 (zugeordnet zu P1 und P2) in den Speicherpuffer für eine spätere Druckausgabe übertragen (Fig. 15b). Auf diese Weise werden die Fenster-Speicher-Streifen W1 und W2 zur Aufnahme neuer Druckdaten für die Folgestreifen P8 und P9 frei. Diese Fenster-Speicher-Streifen werden wie in Abbildung Fig. 15c gezeigt, entsprechend der Fernterposition II den Seiten-Streifen P8 und P9 zugeordnet. Zu diesem Zeitpunkt ist es möglich, das Zeichen p in den dafür vorgesehenen Platz des Fenster-Speichers in einem « Schwung » zu übertragen, wobei sich die Zeichenhöhe des Zeichens p über die Fenster-Speicher-Streifen W3, W4, W5, W6, W7 und W1 und W2 erstreckt (in entsprechender Zuordnung zu den Seiten-Streifen P3 bis P9). Im Anschluß daran kann der Inhalt weiterer Fenster-Speicher-Streifen den Pufferspeicher für eine Druckausgabe der Zeichen q und p übertragen werden.

In Fig. 16 ist eine schematische Darstellung des

Zeichens I gezeigt, dessen oberes und unteres Ende nicht mit einer Streifengrenze auf der Seite abschließt. Auch aus diesem Grunde muß sich die Höhe des Fenster-Speichers nicht nach der absoluten Zeichenhöhe richten, die in diesem Fall drei übereinanderliegende Streifen umfassen soll, sondern nach der Anzahl der Seiten-Streifen (in diesem Fall vier), die teilweise oder ganz zur Darstellung auf der Seite in Anspruch genommen werden (PK, P(K + 1), P(K + 2), P(K + 3)). Der Grund hierfür liegt darin, daß der Fenster-Speicher byteweise adressierbar sein soll. Zur Vermiedung von Mißverständnissen sei bemerkt, daß selbstverständlich jedes Bit innerhalb eines Bytes selektiert werden kann.

In Fig. 17 ist eine schematische Darstellung dreier zu verschiedenen Textblöcken gehörenden Zeichengruppen mit unterschiedlich hohen Zeilengrundlinien gezeigt. Ein solcher Fall könnte z. B. in einem bestimmten Bereich der Seite gemäß Fig. 1 auftreten, bei dem die Textblöcke T1, T4 und T2 nebeneinander liegen. Die einzelnen Zeichengruppen können nicht nur unterschiedlich große Zeichen, sondern auch Zeichenanordnungen in Exponenten- oder Indexschreibweise umfassen. Die einzelnen Grundlinien BL1, BL4 und BL2 für die Zeichenzeilen in den Blöcken T1, T4 und T2 fluchten nicht miteinander. Jedes Zeichen hat entsprechend den Festlegungen in der Typographie eine Oberlänge, Mittellänge und Unterlänge. Die größte Unterlänge hat in der Zeichengruppe mit der Grundlinie BL1 weist das Zeichen j auf, sie ist ausgehend von BL1 mit tdBL1 gekennzeichnet. Sie bildet die Untergrenze für die Zeichenzeile mit der Grundlinie BL1. Die Obergrenze dieser Zeichenzeile soll von dem e in dem Ausdruck $t\frac{e}{S}$ gebildet werden. Sie ist bezogen auf BL1 mit taBL1 gekennzeichnet. Kein anderes Zeichen des Blockes T1 soll über diese unter- oder Obergrenze der Zeile hinaus ragen.

Entsprechende Überlegungen gelten für die Zeichengruppen mit den Grudlinien BL4 und BL2. In der Zeichengruppe mit der Grundlinie BL4 soll das Zeichen f die größte Unterlänge aufweisen und damit die auf BL4 bezogene Untergrenze tdBL4 bilden, während die Obergrenze taBL4 von dem über BL4 liegenden Teil des Zeichens f gebildet wird.

In der Zeichengruppe mit der Grundlinie BL2 ist die Obergrenze taBL2 vom Zeichen d und die Untergrenze tdBL2 vom Zeichen p bestimmt.

Es wurde bereits erwähnt, daß der Fenster-Speicher eine Mindesthöhe aufweisen muß, die ausreicht, um ein Zeichen entsprechend seiner Höhe vollends aufzunehmen. Diese Aussage ist unter Berücksichtigung der Darstellung in Fig. 17 weitgehend zu modifizieren.

Bei der Bestimmung der Fensterspeicher höhe ist die absolute maximale Höhe nur eines Zeichens nicht maßgebend. Da für eine Zeichenzeile (innerhalb eines Blockes) die Grundlinie als fester Referenzwert angesehen wird, gibt es unter den Zeichen dieses Textblockes mindestens eines mit einer maximalen Mittel- und Oberlänge ta und ein anderes (nur in Ausnahmefällen kann es das gleiche Zeichen sein) mit maximaler Unterlänge td. Zur Aufnahem aller Zeichen eines Textblockes bestimmt sich die Fensterhöhe dann aus der Summe von ta plus td.

Schließt man in diese Betrachtungen nicht nur Einzelzeichen, sondern auch Zeichenanordnungen mit exponentenartig hochgestellten oder indexartig tiefgestellten Ausdrücken ein, so muß der Begriff der Fensterhöhe auf die maximale Ober- und Untergrenze einer entsprechenden Zeile auf der Seite abgestellt werden, innerhalb deren alle auf die Zeilengrundlinie bezogenen Zeichen bzw. Zeichenanordnungen ihrer Höhe nach aufgenommen werden können.

Die für eine solche Betrachtung erforderlichen Angaben sind im Datenstrom des Textblockes enthalten. Für jede Zeile ist die Lage ihrer Grundlinie auf der Seite (z. B. durch Angabe der Rasterpunktzeile der Seite) vermerkt. Für jedes Zeichen liegen die Abmessungen seines begrenzenden Rechteckes bezogen auf die Zeichengrundlinie sowie Angaben zur Lage der Zeichengrundlinie bezüglich der Zeilengrundlinie vor. Aus diesen Werten lassen sich (bereits bei der Eingabe des Textblockes in die Datenverarbeitungsanlage) die maximale Ober- und Untergrenze der Zeilen auf der Seite zur Bestimmung der Fensterhöhe ermitteln.

Somit wird für jeden Textblock auf der Seite separat festgestellt, welche maximale Fensterhöhe erforderlich ist. Unter diesen möglicherweise unterschiedlichen Fensterhöhen für die verschiedenen Blöcke wird die größte ausgewählt, um sicherzustellen, daß auch alle Zeichenzeilen aller Blöcke in den Fenster-Speicher mit dieser größten Fensterhöhe Aufnahme finden können.

In diesem Zusammenhang ist es selbstverständlich, daß die Bildblockfelder nicht höher sein dürfen als die gewählte Höhe des Fenster-Speichers, soweit Bildblöcke mitzuverarbeiten sind. Andererseits (wenn ein Bildblockfeld höher wäre als die für eine Textverarbeitung pro Seite ermittelte Fensterhöhe) würde die Höhe des Bildblockfeldes die Höhe des Fenster-Speichers bestimmen.

Bei der Aufbereitung der Druckdaten z. B. für das in Fig. 17 dargestellte Beispiel, ist folgendermaßen vorzugehen : dabei sei vorausgesetzt, daß für den Textblock T1 der zwischen der Obergrenze von TaBL1 und der Untergrenze tdBL1 liegende Bereich ausreicht, alle Zeichenzeilen dieses Textblockes T1 ihrer Höhe nach aufzunehmen.

Analoges soll für den Textblock T4 mit seiner Zeilenobergrenze tBL4 und seiner Zeilenuntergrenze tdBL4 sowie für den Textblock T2 mit seiner Zeilenobergrenze taBL2 und seiner Zeilenuntergrenze tdBL2 gelten.

Die Höhendifferenz der Grundlinien BL1 und BL4 soll d1-4, die der Grundlinien BL4 und BL2 d4-2 betragen.

Die Fentsterhöhe (pro Seite) wird von dem Maximalwert der Summen taBL1 + tdBL1 ; taBL4 + tdBL4 ; taBL2 + tdBL2 bestimmt. Im vorliegenden Fall bestimmt taBL1 + tdBL1 die Fensterhöhe. Dadurch wird garantiert, daß alle Zeilen auf der Seite ihrer Höhe nach vom Fenster-Speicher aufgenommen werden können.

Jetzt erhebt sich die Frage, in welcher Folge die Zeichengruppen der Textblöcke T1, T4 und T2 in den Fenster-Speicher aufgenommen werden.

Das Grundprinzip dafür wurde bereits im Zusammenhang mit Fig. 14 erläutert.

Basierend auf diesem Prinzip ist lediglich durch programmtechnische Abfrage der Zeilen in den Textblöcken T1, T4, T2 herauszufinden, welche Zeile die höchstliegenste Obergrenze hat ; im Falle der Fig. 17 ist dies die Zeichengruppe « ßdp » mit der Grundlinie BL2. Diese Zeichengruppe wird in den Fenster-Speicher geladen. Dann wird der Inhalt eines Teiles der Fenster-Speicher-Streifen in den Ausgabepuffer übertragen, so daß anschließend die Zeichengruppe « ofq » mit der nächst tieferliegenden Obergrenze in den Fenster-Speicher geladen werden kann. Diesem Vorgang folgt wiederum die Übertragung des Inhalts eines Teiles der Fenster-Speiche-Streifen in den Ausgabepuffer, bis endlich die letzte Zeichengruppe j $\frac{t}{3}$ in den Fenster-Speicher gestellt werden kann.

(Würden alle in Fig. 17 gezeigten Zeichen-Gruppen nicht zu verschiedenen Textblöcken, sondern nur zu einem einzigen Textblock gehören, müßte das Fenster eine Höhe von taW + tdW aufweisen, wenn die Information in der Reihenfolge j $\frac{t}{3}$ o f g, ß d p angeliefert würde).

Im vorliegenden Ausführungsbeispiel sind die Betrachtungen zu der Folge, in welcher die Zeilen verschiedener neheneinanderliegender Blöcke in den Fensterspeicher geladen werden, auf die Obergrenze der jeweiligen Zeilen abgestellt.

Dies setzt voraus, daß entsprechende Angaben zur Höhe der einzelnen Zeichen und zur Lage ihrer Grundlinie verfügbar sind, um daraus auf die Obergrenze einer Zeile schließen zu können.

Es ist denkbar, neben der Lage der Grundlinie auch die Höhen der Zeichen im Textblock — wie er an die Datenverarbeitungsanlage geliefert wird — mit anzugeben. Dann kann durch entsprechende programmtechnische Abfragen in diesem Textblock leicht jenes Zeichen mit maximaler Ober- und Mittellänge und jenes Zeichen mit maximaler Unterlänge herausgefunden werden zur Bestimmung der maximalen Ober- und Untergrenze der Textblockzeilen.

Soll auf diesen Aufwand, die einzelnen Zeichenhöhen im angelieferten Textblock zu vermerken, verzichtet werden, so gibt es die Möglichkeit, die Höhen der einzelnen Zeichen im Schriftartspeicher mitzuvermerken.

Programmtechnisch gesehen würde es natürlich einen größeren Aufwand bedeuten, für jedes Zeichen des angelieferten Textblockes zunächst aus dem Schriftartspeicher die Höhe (aufgegliedert nach Mittel- und Oberlänge sowie nach Unterlänge) abzufragen und daraus für alle Zeilen eines Blockes die maximale Ober- und Untergrenze zu ermitteln, deren Kenntnis zur Bestimmung der Fensterhöhe Voraussetzung ist.

Es gibt jedoch auch eine andere, sehr zweckmäßige Möglichkeit, viele solcher programmtechnischen Abfragen zur Bestimmung der maximalen Obergrenze und Untergrenze für die Zeilen eines Blockes zu vermeiden.

Dazu braucht lediglich in dem an die Datenverarbeitungsanlage gelieferten Textblock u. a. neben der Positionsangabe für die Zeichengrundlinie eine einzige Angabe zur maximalen Ober- und Mittellänge (aller Zeichen) und eine einzige Angabe zur maximalen Unterlänge (aller Zeichen) vorgesehen sein. Dann ließe sich die Fensterhöhe (z. B. im Falle von Fig. 17) leicht dadurch bestimmt, daß man für die drei Blöcke mit den Grundlinien BL1, BL4 und BL2 den größten Wert von taBL1, taBL4 und taBL2 ermittelt (in diesem Fall taBL4) und den größten Wert von tdBL1, tdBL4 und tdBL2 ermittelt (in diesem Fall tdBL1) und die Fensterhöhe aus der Summe von taBL4 + tdBL1 ermittelt. Dies hätte den Vorteil, daß man sich bei der Folge, in welcher die Druckdaten der einzelnen Textblöcke aufzubereiten sind, lediglich auf die Folge der Zeilengrundlinien der einzelnen Blöcke (und nicht auf die Zeilen-Obergrenze) im Fenster beziehen müßte :

Zuerst wird die Blockzeile mit der höchstliegensten Grundlinie, also BL2 aufbereitet ; dann folgt der Block mit der nächst tieferliegenden Grundlinie, also BL4, und schließlich folgt der Block mit der Grundlinie BL1.

Die Angaben zur Lage der Zeilengrundlinien sind ohnehin in den angelieferten Textblöcken enthalten und werden auch in die Blockindizes mitübernommen. Programmtechnisch gesehen, brauchen also (nachdem die Fensterhöhe zu taBL4 + tdBL1 festgelegt wurde) nur die Blockindizes nach der Lage der Zeilengrundlinien abgefragt zu werden, um die Folge der Zeilen der verschiedenen Blöcke für die Aufbereitung der Daten zu bestimmen.

Es wurde bereits erwähnt, daß innerhalb eines Blockes die Daten zweckmäßgerweise sequentiell angeliefert werden sollen. Mit anderen Worten : Die Zeichengrundlinien sollten (auf der Seite gesehen) von oben nach unten verlaufen. Sprünge in diesem Verlauf, z. B. bei Exponentenschreibweisen, werden in Kauf genommen, sollten aber nach Möglichkeit vermieden werden, da sie die Fensterhöhe vergrößern. Andernfalls würde ein zeitaufwendiges Sortieren der Zeichen nach ihrer Grundlinie als Ordnungsbegriff angeraten sein.

Es wurde bereits erwähnt, daß die Daten für jeden Block seriell an den Speicher der Datenverarbeitungsanlage geliefert werden. Die Reihenfolge der verschiedenen Blöcke kann dabei beliebig sein. Die Blöcke können an freiwählbaren Stellen der Datenverarbeitungsanlage gespeichert werden. Dabei ist lediglich durch einen programmierbaren Adreßindex sicherzustellen, an welchen Stellen des Speichers zu den einzelnen Textblöcken bzw. Bildblöcken Zugriff genommen werden kann.

Bei der Eingabe der einzelnen Text- und Bildblöcke ist wie bereits erwähnt der Layout-Plan für die Seite (z. B. Fig. 1) festgelegt. Die Textblöcke (und Bildblöcke) müssen u. a. neben der Angabe der Koordinaten, an welchen Stellen der Seite später auszudrucken ist, auch Angaben über die zu wählenden Schriftarten und Schriftgrößen, und Positionsangaben der Grundlinien für die einzelnen Zeichen innerhalb der Blockzeilen enthalten. Im folgenden seien alle diese für die Druckdatenaufbereitung eines Blockes erforderlichen Angaben Blocksteuerdaten genannt.

Beim Einlesen eines Textblockes in den Speicher der Datenverarbeitungsanlage wird durch ein entsprechendes Programm für jeden Textblock (bzw. Bildblock) ein sogenannter Blockindex erstellt. In diesem Blockindex werden u. a. die Koordinatenwerte für die spätere Plazierung des Blockes auf der Seite aufgenommen.

Die Angaben hierzu werden wiederum aus den Blocksteuerdaten abgeleitet. Des weiteren enthält der Blockindex einen sogenannten Blockadreßzeiger und einer sogenannten Fenster-Speicheradreßzeiger.

Der Blockadreßzeiger weist auf eine bestimmte Adresse des Text- (oder Bild) blockes hin, von der — falls erforderlich über den Schriftartspeicher — Information in den Fenster-Speicher zu übertragen ist. Die Adresse, an welchen Stellen des Fenster-Speicher die Zeichen zu positionieren sind, folgt aus den Blocksteuerdaten. Innerhalb einer Zeichenzeile eines Blockes werden die Zeichen nacheinander in die entsprechenden Teile des Fenster-Speichers übertragen. Die Blocksteuerdaten stellen eine entsprechende Adreßkettung sicher. Außerdem ist vornherein sichergestellt, daß der Fenster-Speicher eine genügende Höhe aufweist, um auch die Zeichenzeile mit der größten Höhe auf der Seite vollends aufnehmen zu können. Auf diese Weise können die Zeichen in einem « Schwung » in den Fenster-Speicher übertragen werden. Es ist selbstverständlich nicht ausdrücklich zu betonen, daß der Blockadreßzeiger bei entsprechenden Steuervorgängen ständig auf den neuesten Stand gebracht wird.

Der Fensterspeicheradreßzeiger liefert einen Hinweis, ob der Block Beiträge zu einer Fensterposition liefert oder nicht.

Für jede Fensterposition ist bekannt, welche Punktrasterzeilen auf der Seite dieser Fensterposition zugeordnet sind. Dadurch ist es möglich, durch eine programmtechnische Abfrage der einzelnen Blockindexe festzustellen, ob ein bestimmter Block Beiträge zu einer Fensterposition liefert oder nicht. Je nach Fensterposition sind den Bitzeilen des Fenster-Speichers entsprechende absolute Punktrasterzeilen der Seite zugeordnet. Durch Vergleich der aktuellen Punktrasterzeile auf der Seite mit dem Punktrasterzeilenbereich eines Blockes auf der Seite (entsprechende Koordinaten-Werte sind im Blockindex gespeichert) weist das Vergleichsergebnis (als Fenster-Speicher-Adreßzeiger) aus, ob der Block für eine bestimmte Fensterposition einen Beitrag liefert oder nicht.

Es ist verständlich, daß der Fenster-Speicher-Adreßzeiger ebenfalls ständig auf den neuesten Stand zu bringen ist.

Programmtechnisch gesehen, bedeutet es keine Schwierigkeit, die einzelnen Blockindizes nacheinander abzufragen, um festzustellen, mit welcher Blockzeichenzeile die Druckdatenaufbereitung im Fenster-Speicher zu beginnen hat und mit welchen anderen Blockzeilen sie fortzuführen ist. Verfahrensschritte hierzu wurden detailliert beschrieben. Ihre Realisierung durch ein entsprechendes Computerprogramm ist für einen Programmierer naheliegend und wird deshalb nicht weiter ausgeführt. Des weiteren bieten sich auch Möglichkeiten an, daß erfindungsgemäße Verfahren aus Gründen der Arbeitsgeschwindigkeit bzw. des Speicherplatzbedarfes zumindest teilweise durch sogenannte Computerhardware (d. h. durch entsprechende Schaltungen zu realisieren). Als Beispiel hierfür sei nur ein « Read-only-memory » für einen Schriftartenspeicher genannt. Die Bildblöcke enthalten in Analogie zu den Textblöcken ebenfalls Blocksteuerdaten so z. B. Koordinatenangaben zu ihrer Plazierung auf der Seite und Angaben zur Größe der einzelnen Bildblockfelder. Für jeden Bildblock wird auch ein entsprechender Blockindex mit einem Blockadreßzeiger und einem Fenster-Speicher-Adreßzeiger erstellt.

Weil bei den Bildblöcken die Information bereits bitweise vorliegt, kann diese Information direkt oder indirekt (falls eine Dekomprimierung erforderlich ist) in den Fenster-Speicher übertragen werden.

Wenn im angegebenen Ausführungsbeispiel die Bestimmung der Fensterhöhe jeweils für eine Seite erfolgt, so ist es aber auch denkbar, die Fensterhöhe nur auf kleinere Bereiche einer Seite zu beziehen, was aber mit einem höheren programmtechnischen Auswand verbunden ist.

**Patentansprüche**

1. Verfahren zur Aufbereitung von in Punktrasterzeilen auf der Seite (bzw. Bildfläche) eines Aufzeichnungsmediums darzustellender Zeichen- und/oder Bildinformation im Speicher einer Datenverarbeitungsanlage, dadurch gekennzeichnet, daß

a) die Zeichen- und/oder Bildinformation mit Positionsangaben für ihre Masterpunktgetreue auf der Seite in codunten Darstellung verfübgbar ist,

b) ein wahlweise adressierbarer Speicher- im folgenden Fenster-Speicher (5) genannt-, welcher kleiner ist als zur bitweisen Darstellung der ganzen Seite erforderlich wäre, zur Aufbereitung eines n Punktrasterzeilen umfassenden Teiles der Zeichen- und/oder Bildinformation der Seite vorgesehen ist, welche rasterpunktweise an den Fenster-Speicher (5) geliefert wird,

c) ein Pufferspeicher (7) für die Aufnahme der Information für k Punktrasterzeilen mit k < n aus dem Fenster-Speicher zur späteren Aufzeichnung auf der Seite vorgesehen ist,

d) die die Information für die Punktrasterzeilen aufnehmenden Zeilen des Fenster-Speichers (5) in zyklischer Reihenfolge aufeinanderfolgenden Punktrasterzeilen der Seite zugeordnet werden,

e) der Inhalt der für die Aufzeichnung aufbereiteten Zeilen des Fenster-Speichers (5) zeilenweise nacheinander in zusammenhängenden oder unterbrochenen Zeitabschnitten in den Pufferspeicher (7) übertragen wird,

f) nach der Übertragung des Inhaltes einer oder mehrerer Zeilen des Fenster-Speichers (5) in den Pufferspeicher (7) die dadurch freigewordenen Zeilen des Fenster-Speichers (5) für die Aufnahme neuer aufzubereitender Zeichen-und/oder Bildinformation für Folge-Punktrasterzeilen auf der Seite zur Verfügung stehen,

g) der Fenster-Speicher (5) eine Mindesthöhe, gemessen an der Anzahl seiner Bitzeilen, aufweist, die die Aufnahme sowohl eines Bildblockfeldes eines matrixartig in Felder aufgeteilten als Bildblock betrachteten Bildes als auch eines (r) innerhalb einer Bezugsfläche voller Seitenbreite gedachten Zeichens mit maximal möglicher Ober-, Mittel- und Unterlänge oder Zeichenanordnung mit exponentenähnlich hochgestellten oder indexähnlich tiefgestellten Ausdrücken gestattet,

h) auf die codierte Information eines Zeichens oder eines Bildblockfeldes in zusammenhängenden Zeitabschnitten zugegriffen wird, und daß diese Information in zusammenhängenden Zeitabschnitten in den durch Positionsangaben dafür vorgesehenen Teil des Fenster-Speichers (5) übertragen wird.

2. Verfahren nach Anspruch 1, dadurch gekennzeichnet, daß für ein Seiten-Layout mit nebeneinanderliegenden Text- und/oder Bildblöcken die Textzeilen oder Bildblockfeldzeilen aller Blöcke in der Reihenfolge ihrer Obergrenzen oder Grundlinien auf der Seite (von oben nach unten) in den Fensterspeicher (5) übertragen werden.

3. Verfahren nach Anspruch 2, dadurch gekennzeichnet, daß bei nebeneinanderliegenden Text- und/oder Bildblöcken miteinander fluchtende Textzeilen oder Bildblockfeldzeilen in beliebiger Folge in den Fenster-Speicher (5) übertragen werden.

4. Verfahren nach Anspruch 2, dadurch gekennzeichnet, daß für ein Seiten-Layout mit nebeneinander liegenden Text- und/oder Bildblöcken mit nicht miteinander fluchtenden Textzeilen oder Bildblockfeldzeilen zuerst die Zeile des Textblockes oder die Bildblockfeldzeile des Bildblockes in den Fenster-Speicher (5) übertragen wird, deren Obergrenze auf der Seite über der der Zeilen anderer Blöcke liegt, daß anschließend der Inhalt der Zeilen des Fenster-Speichers (5) in den Pufferspeicher (7) zur späteren Aufzeichnung übertragen wird, die zwischen der Obergrenze der Zeile des Blockes der gerade in den Fenster-Speicher (5) übertragen wurde, und der dieser nächstliegenden Obergrenze der Zeile eines der anderen Blöcke liegt, oder daß zuerst die Zeile des Textblockes oder die Bildblockfeldzeile des Bildblockes in den Fenster-Speicher (5) übertragen wird, dessen Grundlinie auf der Seite über der der Zeilen anderer Blöcke liegt, und daß anschließend der Inhalt der Zeilen des Fenster-Speichers (5) in den Pufferspeicher (7) zur späteren Aufzeichnung übertragen wird, die zur anschließenden Aufnahme der Zeile des Blockes mit der der Grundlinie des gerade in den Fenster-Speicher (5) übertragenen Blockes nächstliegenden Grundlinie in den Fenster-Speicher (5) erforderlich sind.

5. Verfahren nach Anspruch 4, dadurch gekennzeichnet, daß die Fenster-Speicher-Höhe für nicht miteinander fluchtende Obergrenzen von Textzeilen bzw. Bildblockfeldzeilen nebeneinanderliegender Text- und/oder Bildblöcke, sofern sie größer als eine maximal vorgegebene Bildblockfeldhöhe ist, vom maximalen Wert der Teilsummen bestimmt wird, die sich aus der jeweiligen Addition des maximalen Abstandes der Obergrenze einer Zeile innerhalb eines Blockes von der Zeilengrundlinie und des maximalen Abstandes der Untergrenze einer Zeile dieses Blockes von der Zeilengrundlinie ergibt, und daß die einzelnen Textzeilen bzw. Bildblockfeldzeilen der verschiedenen, nebeneinanderliegenden Blöcke in der Reihenfolge ihrer Obergrenzen auf der Seite in den Fenster-Speicher (5) übertragen werden.

6. Verfahren nach Anspruch 4, dadurch gekennzeichnet, daß sich die Fenster-Speicher-Höhe mit nicht miteinander fluchtende Grundlinien der Text- bzw. Bildblockfeldzeilen nebeneinanderliegender Text- und/oder Bildblocke, sofern sie größer als eine maximale vorgegebene Bildblockfeldhöhe ist, aus der Summe zweier Größen ermittelt wird, wobei die erste Größe der maximale Abstand der Obergrenze einer beliebigen Zeile aller Blöcke von der Zeilengrundlinie und die zweite Größe der maximale Abstand der Untergrenze einer beliebigen Zeile aller Blöcke von der Zeilengrundlinie ist, und daß die einzelnen Blockzeilen in der Reihenfolge ihrer Grundlinien auf der Seite in den Fenster-Speicher (5) übertragen werden.

7. Verfahren nach einem der Ansprüche 1 bis 6, dadurch gekennzeichnet, daß die Zeichen- und/oder Bildinformation für eine Bild- und/oder Textblöcke umfassende Layout-Gestaltung der Seite blockweise an die Datenverarbeitungsanlage geliefert wird, daß die Textblöcke neben den Zeichen in codierter Form Angaben zur späteren Positionierung des Blockes und der Zeichen auf der Seite, zur Zeichenart und -größe, sowie Steuerinformation zur Bestimmung der Fensterhöhe enthalten, daß die Rasterinformation für ein durch seinen Code gekennzeichnetes Zeichen aus einem Schriftartspeicher (11) abrufbar ist, und daß die Bildblöcke Rasterpunktinformation enthalten.

8. Verfahren nach einem der Ansprüche 1 bis 7, dadurch gekennzeichnetk, daß bei einem byteorientierten Speicher (1 Byte = q Bits) die Druckdatenübertragung byteweise und q Bit-parallel erfolgt.

9. Verfahren nach einem der Ansprüche 1 bis 8, dadurch gekennzeichnet, daß die bestimmung der Höhe des Fenster-Speichers (5) für jede Seite erfolgt.

10. Verfahren nach einem der Ansprüche 1 bis 9, gekennzeichnet durch seine Anwendung für Laser-Drucker.

11. Verfahren nach einem der Ansprüche 1 bis 9 zur Anwendung bei Metallpapierdruckern mit einem k-Elektroden enthaltenden Schreibkopf, bei dem jede Elektrode jeweils eine Punktrasterzeile erzeugt.

12. Verfahren nach Anspruch 11, dadurch gekennzeichnet, daß die Elektroden des Schreibkopfes in Gruppen aufgeteilt sind, wobei die Anzahl der Elektroden in einer Gruppe der Anzahl der Bits eines Bytes entspricht.

## Claims

1. Method of editing in the storage of a data processing system character and/or image information to be represented in dot pattern lines on the page (or image screen) of a recording medium, characterized in that

a) the character and/or image information together with position data for positioning such information on the page according to the dot pattern is available in coded notation,

b) a selectively addressable storage — subsequently referred to as window storage (5) — which is smaller than would be necessary for representing the entire page bit-by-bit, is provided for editing part of the character and/or image information of the page with n dot pattern lines which is supplied dot-by-dot to the window storage (5),

c) a buffer storage (7) is provided for accommodating from the window storage the information for k dot pattern lines, where k < n, to be recorded on the page later,

d) the lines of the window storage (5) accommodating the information for the dot pattern lines are cyclically associated with successive dot pattern lines of the page,

e) the contents of the lines of the window storage (5), that have been edited for recording, are successively transferred line-by-line in continuous or interrupted periods to the buffer storage (7),

f) after the contents of one or several lines of the window storage (5) have been transferred to the buffer storage (7), the lines of the window storage (5) thus becoming free are available for accommodating character and/or image information to be newly edited for subsequent dot pattern lines,

g) compared to the number of its bit lines, the window storage (5) has a minimum height which permits accommodating an image block field of an image subdivided into fields in the form of a matrix and treated as an image block, as well as an assumed character with maximum ascender, x- and descender heights in a reference area of full page width or a character structure with raised (exponent) or indexed expressions,

h) the coded information of a character or an image block field is accessed in continuous periods, and that this information is transferred in continuous periods to the part of the window storage (5) designated by the position data.

2. Method according to claim 1, characterized in that for a page layout with adjacent text and/or image blocks, the text lines or image block field lines of all blocks are transferred in the order of their upper boundaries or baselines on the page (from top to bottom) to the window storage (5).

3. Method according to claim 2, characterized in that for adjacent text and/or image blocks, aligned text lines or image block field lines are transferred in a random order to the window storage (5).

4. Method according to claim 2, characterized in that for a page layout with adjacent text and/or image blocks with non-aligned text or image block field lines, initially the line of the text block or the image block field line having its upper boundary on the page above that of the lines of other blocks is transferred to the window storage (5), that subsequently the contents of the lines of the window storage (5),which are between the upper boundary of the line of the block just transferred to the window storage (5) and the upper boundary next to it of the line of one of the other blocks, are transferred to the buffer storage (7) to be recorded later, or that initially the line of the text block or the image block field line of the image block having its baseline on the page above that of the lines of the other blocks is transferred to the window storage (5), and that the contents of the lines of the window storage (5), which are necessary for subsequently accommodating that block line having its baseline closest to the baseline of the block just transferred to the window storage (5), are then transferred to the buffer storage (7) to be recorded later.

5. Method according to claim 4, characterized in that the height of the window storage for non-aligned upper boundaries of text lines or image block field lines of adjacent text and/or image blocks, provided it exceeds a maximum predetermined image block field height, is a function of the maximum value of the partial sums which are obtained by adding the maximum distance of the upper boundary of a line within a block from the line base and the maximum distance of the lower boundary of a line of that block from the line base, and that the individual text lines or image block field lines of the several adjacent blocks are transferred in the order of their upper boundaries on the page to the window storage (5).

6. Method according to claim 4, characterized in that the height of the window storage with non-aligned baselines of the text or image block field lines of adjacent text and/or image blocks, provided it exceeds a maximum predetermined image block field height, is derived from the sum of two values, the first value being the maximum distance of the upper boundary of an arbitrary line of all blocks from the line base, and the second value being the maximum distance of the lower boundary of an arbitrary line of all blocks from the line base, and that the individual block lines are transferred in the order of their baselines on the page to the window storage (5).

7. Method according to any one of the claims 1 to 6, characterized in that the character and/or image information for a page layout comprising image and/or text blocks is supplied in blocks to the data processing system, that the text blocks, in addition to the coded characters, comprise data for later one positioning the block and the characters on the page, information on the character type and size, as well as control information for determining the window height, that the pattern information for a character defined by its code can be fetched from a typefont buffer (11), and that the image blocks contain dot pattern information.

8. Method according to any one of the claims 1 to 7, characterized in that for a byte-oriented storage (1 byte = q bits), the print data are transferred byte-by-byte and q-bit-parallel.

9. Method according to any one of the claims 1 to 8, characterized in that the height of the window storage (5) is determined for each page.

10. Method according to any one of the claims 1 to 9, characterized by its use for laser printers.

11. Method according to any one of the claims 1 to 9 for use in metal paper printers with a k-electrode print head, wherein each electrode generates one dot pattern line.

12. Method according to claim 11, characterized in that the electrodes of the print head are subdivided into groups, with the number of electrodes in a group corresponding to the number of bits of a byte.

**Revendications**

1. Procédé pour préparer une information de caractère et/ou d'image, devant être représentée selon des lignes d'une trame de points sur la page (ou la surface d'image) d'un support d'enregistrement, dans la mémoire d'une installation de traitement de données, caractérisé en ce que :

a) l'information de caractères et/ou d'image est disponible sous une représentation codée, ainsi que des indications de position pour sa disposition, conformément aux points de la trame, sur la page,

b) une mémoire adressable au choix — désignée ci-après sous le terme de mémoire à fenêtre (5) — qui est plus petite que ce qui serait nécessaire pour la représentation bit par bit de l'ensemble de la page, est prévue pour la préparation d'une partie, englobant n lignes de la trame de points, de l'information de caractère et/ou d'image de la page, qui est délivrée sous la forme de points de la trame à la mémoire à fenêtre (5),

c) une mémoire tampon (7) est prévue pour la réception de l'information pour k lignes de la trame de points avec k < n, en provenance de la mémoire de fenêtre en vue de l'enregistrement ultérieur sur la page,

d) les lignes de la mémoire à fenêtre (5), qui reçoivent l'information pour les lignes de la trame de points, sont associées à des lignes de la trame de points de la page, qui se succèdent selon une succession cyclique,

e) le contenu des lignes de la mémoire à fenêtre (5), qui sont préparées pour l'enregistrement, est transmis successivement ligne par ligne dans des créneaux temporels d'un seul tenant ou interrompus dans la mémoire tampon (7),

f) après la transmission du contenu d'une ou de plusieurs lignes de la mémoire à fenêtre (5) dans la mémoire tampon (7), les lignes, qui ont été de ce fait libérées de la mémoire à fenêtre (5) sont disponibles pour l'enregistrement d'une nouvelle information de caractère et/ou d'image devant être préparée, pour des lignes successives de la trame de points sur la page,

g) la mémoire à fenêtre (5) possède une hauteur minimale mesurée au nombre de ces lignes de bits, qui permet l'enregistrement aussi bien d'une zone d'un bloc d'une image considérée sous la forme d'un bloc d'image et subdivisée en zones selon une configuration matricielle, ainsi que d'un ou de caractères, imaginés à l'intérieur d'une surface de référence s'étendant sur toute la largeur de la page, avec un jambage supérieur, un oeil de lettre et un jambage inférieur maximum possibles, ou bien une disposition des caractères avec des termes placés en position haute à la manière d'exposants ou des termes placés en position basse à la manière d'indices,

h) l'accès est réalisé à l'information des mots des codes d'un caractère ou d'une zone de bloc d'image dans des créneaux temporels d'un seul tenant, et cette information est transmise dans des créneaux temporels d'un seul tenant, dans la partie de la mémoire à fenêtre (5) qui est munie à cet effet d'indications de position.

2. Procédé selon la revendication 1, caractérisé en ce que, pour une composition de la page avec les blocs de texte et/ou d'image disposés côte-à-côte, les lignes de texte ou les lignes de zone d'image de tous les blocs sont transmises dans la mémoire à fenêtre (5) dans l'ordre de leurs limites supérieures ou de leurs lignes de base sur la page (du haut vers le bas).

3. Procédé suivant la revendication 2, caractérisé en ce que dans le cas de blocs de texte et/ou d'image disposés côte-à-côte, des lignes de texte ou des lignes de zone d'image, qui sont alignées entre elles, sont transmises selon une succession quelconque dans la mémoire à fenêtre (5).

4. Procédé selon la revendication 2, caractérisé en ce que, pour une composition de la page avec des blocs de texte et/ou d'image disposés côte-à-côte et avec des lignes de texte ou des lignes de zones de blocs d'image alignées les unes par rapport aux autres, tout d'abord la ligne du bloc de texte ou la ligne de la zone du bloc d'image, dont la limite supérieure est située sur la page au-dessus des lignes d'autres blocs, est transmise dans la mémoire à fenêtre (5), qu'ensuite le contenu des lignes de la mémoire à fenêtre (5), qui est située entre la limite supérieure de la ligne du bloc, qui a été précisément transmis dans la mémoire à fenêtre (5), et la limite supérieure, qui intervient immédiatement à la suite de cette limite, de la ligne de l'un des autres blocs, est transmis dans la mémoire tampon (7) en vue de sa présentation ultérieure, ou bien que tout d'abord la ligne du bloc de texte ou la ligne de la zone du bloc de texte, dont la ligne de base est située sur la page au-dessus de celle des lignes d'autres blocs, est transmise dans la mémoire à fenêtre (5) et qu'ensuite le contenu des lignes de la mémoire à fenêtre (5), qui sont nécessaires pour la mémoire à fenêtre (5) pour l'enregistrement ultérieur de la ligne du bloc possédant la ligne de base qui intervient immédiatement à la suite de la ligne de base du bloc précisément transmis dans la mémoire à fenêtre (5), est transmis dans la mémoire tampon (7) pour son enregistrement ultérieur.

5. Procédé selon la revendication 4, caractérisé en ce que la hauteur de la mémoire à fenêtre, pour des limites supérieures, non alignées entre elles, de lignes de texte ou de lignes de zones de blocs de texte et/ou d'image disposés côte-à-côte est déterminée, dans la mesure où ces limites ne sont pas supérieures à une hauteur de zone de bloc d'image maximale prédéterminée, par la valeur maximale des sommes partielles qui résultent de l'addition de la distance maximale entre la limite supérieure d'une ligne à l'intérieur d'un bloc et la ligne de base de la ligne, et de la distance maximale entre la limite inférieure d'une ligne de ce bloc et la ligne de base de la ligne et que les différentes lignes de texte ou les différentes lignes de zone des différents blocs d'image disposés côte-à-côte sont transmises dans la mémoire à fenêtre (5), selon la succession de leurs limites supérieures sur la page.

6. Procédé selon la revendication 4, caractérisé en ce que la hauteur de la mémoire à fenêtre dans le cas de lignes de base, non alignées entre elles, des lignes de blocs de texte ou de zones de blocs d'image appartenant à des blocs de texte et/ou des blocs d'image disposés côte-à-côte est déterminée, dans la mesure où elle n'est pas supérieure à une hauteur prédéterminée maximale de la zone du bloc d'image, à partir de la somme de deux grandeurs, la première grandeur étant l'écart maximum entre la limite supérieure d'une ligne quelconque de tous les blocs et de la ligne de base de cette ligne et la seconde grandeur étant la distance maximale entre la limite inférieure d'une ligne quelconque de tous les blocs et la ligne de base de la ligne, et que les différentes lignes de bloc sont transmises, suivant la succession de leur lignes de base sur la page, dans la mémoire à fenêtre (5).

7. Procédé suivant l'une des revendications 1 à 6, caractérisé par le fait que l'information de caractères et/ou d'image pour un type de composition englobant des blocs d'image et/ou de texte, est délivrée par blocs à l'installation de traitement de données, que les blocs de texte contiennent, en-dehors des caractères, sous forme codée, des indications pour le positionnement ultérieur du bloc et des caractères sur la page, le type et la taille des caractères ainsi qu'une information de commande pour déterminer la hauteur de la fenêtre, que l'information de trame pour un caractère caractérisé par son code peut être appelée hors d'une mémoire (11) des types d'impression, et que les blocs d'image contiennent une information de points de trame.

8. Procédé selon l'une des revendications 1 à 7, caractérisé en ce que dans le cas d'une mémoire fonctionnant au niveau des multiplets (1 multiplet = q bits), la transmission des données d'impressions s'effectue multiple par multiplet et en parallèle sur q bits.

9. Procédé selon l'une des revendications 1 à 8, caractérisé en ce que la détermination de la hauteur de la mémoire à fenêtre (5) est réalisée pour chaque tâche.

10. Procédé selon l'une des revendications 1 à 9, caractérisé par son application à une imprimante laser.

11. Procédé selon l'une des revendications 1 à 9, pour son application dans des imprimantes sur papier métallisé comportant une tête d'enregistrement contenant k électrodes et dans laquelle chaque électrode produit respectivement une ligne de la trame de points.

12. Procédé selon la revendication 11, caractérisé en ce que les électrodes de la tête d'enregistrement sont réparties selon des groupes, le nombre des électrodes d'un groupe correspondant au nombre des bits d'un multiplet.

FIG. 1

FIG. 2A

FIG. 2

**FIG. 3**

**FIG. 4**

**FIG. 4A**

**FIG. 5**

**0 096 079**

| T1: | W1(P1) | ⟶ | B1(P1) |
| | W2(P2) | ⟶ | B2(P2) |
| T2: | RI | ⟶ | W1(P8) |
| | RI | ⟶ | W2(P9) |
| T3: | W3(P3) | ⟶ | B3(P3) |
| | W4(P4) | ⟶ | B4(P4) | (DRUCKAUSGABE IN P1  P4) |
| T4: | RI | ⟶ | W3(P10) |
| | RI | ⟶ | W4(P11) |
| T5: | W5(P5) | ⟶ | B1(P5) |
| | W6(P6) | ⟶ | B2(P6) |
| | W7(P7) | ⟶ | B3(P7) |
| T6: | RI | ⟶ | W5(P12) |
| | RI | ⟶ | W6(P13) |
| | RI | ⟶ | W7(P14) |
| T7: | W1(P8) | ⟶ | B4(P8) | (DRUCKAUSGABE IN P5  P8) |
| T8: | RI | ⟶ | W1(P15) |

**FIG. 6**

**FIG.7**

3

FIG. 8

FIG. 9

FIG. 10

FIG.11

FIG.12

FIG.13

FIG.14

FIG.15A

FIG.15B

FIG.15C

FIG.16

FIG.17

FIG.18